# EUROPEAN PATENT APPLICATION

(11) **EP 4 631 681 A1**
(43) Date of publication of application: **15.10.2025**
(21) Application number: 23900631.5
(22) Date of filing: 04.12.2023
(51) Int. Cl.: B25J 15/06, B25J 15/08

(54) **ROBOT CONTROL SYSTEM, ROBOT HAND, ROBOT CONTROL PROGRAM, INFORMATION MANAGEMENT PROGRAM, AND INFORMATION PROCESSING PROGRAM**

(30) Priority: 07.12.2022 JP 2022195944; 26.01.2023 JP 2023010484; 26.01.2023 JP 2023010485; 02.02.2023 JP 2023014884; 03.02.2023 JP 2023015496
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/043356
(87) International publication number: WO 2024/122516

(57) **Abstract**

Three finger portions are provided at a gripping portion, and plural suctioning pads are attached to a palm side of the gripping portion and the three finger portions. The suctioning pad suctions a load with an air suction structure, for example. By bending the three finger portions, the load can be grasped. By attaching a palm sensor including a high-resolution camera and a MoPU to the palm side and attaching the gripping portion having the above structure to an arm portion of a humanoid robot, it is possible to reliably pick an object by a suction surface, and even in a case in which a motion of the humanoid robot is early, it is possible to carry the load without dropping from the gripping portion.

## Description

### Technical Field

The present disclosure relates to a control system for a robot, a robot hand, a control program for a robot, an information management program, and an information processing program.

### Background Art

In a production line of a factory, a humanoid robot for automatically performing a task is used. Japanese Patent Application Laid-Open (JP-A) No. 2019-093506 discloses posture control of a humanoid robot.

WO2011/001569 discloses a robot arm that is driven by an elastic actuator and has a plurality of joints. The robot arm is controlled by a hand tip support member that is disposed at a hand tip of the robot arm and supports the robot arm by coming into contact with a support surface, and a control unit that controls a contact force between the hand tip support member and the support surface and simultaneously controls a position and a posture of a hand tip of the robot arm.

### SUMMARY OF INVENTION

### Technical Problem

However, in a picking task in a warehouse by a conventional humanoid robot, for example, a case in which loads (shampoos, conditioners, cosmetics, toothpastes, cup noodles, confectionery bags or the like having different shapes, weights, hardnesses, fragrances, or the like) are picked up from a shelf on which the loads are displayed, and the loads are accommodated in a predetermined package (a box or the like) and packed relies on the hand of a person.

Even though the structure of a gripping portion of a robot corresponds to a finger type, the motion of a finger and an arm is slow, so that productivity is low.

In view of the above circumstances, an object of the disclosure is to obtain a control system for a robot, a robot hand, a control program for the robot, an information management program, and an information processing program capable of quickly and reliably performing a series of tasks including checking of a position of a load, grasping, and gripping by a gripping portion.

### Solution to Problem

According to the disclosure, there is provided a control system for a robot capable of disposing, opposite a target object, a gripping portion including a palm portion serving as a base for gripping the target object and a plurality of finger portions radially extending from the palm portion and gripping the target object. The control system includes: a suctioning pad that is provided at the palm portion and the finger portion and suctions the target object; a palm sensor unit that is provided at the palm portion and detects target object information including a shape and a position of the target object; and a control unit that selects any one of a first function of performing sucking by the suctioning pad, a second function of performing grasping by the palm portion, and a third function of using both the first function and the second function as a function of gripping the target object based on a detection result of the palm sensor unit and controls an operation of gripping the target object.

According to the disclosure, the control unit selects any one of the first function of performing sucking by the suctioning pad, the second function of performing grasping by the palm portion, and the third function of using both the first function and the second function as the function of gripping the target object based on the detection result of the palm sensor, and controls the operation of gripping the target object.

As a result, it is possible to quickly and reliably perform a series of tasks including checking of the position of the target object (may be referred to as a load below), grasping, and gripping by the gripping portion.

In the disclosure, the palm sensor unit includes a camera that captures an image of the target object and identifies a type of the target object, and a motion processing unit that specifies the position of the target object.

The camera identifies the captured target object based on the captured image information. That is, the camera has a role of acquiring information for specifying the type (a shape, a size, hardness or the like) of the target object.

The motion processing unit (MoPU) outputs, as motion information, vector information of a motion along a predetermined coordinate axis of a point indicating an existence position of an object. That is, the motion information output from the MoPU includes only information indicating a motion (a moving direction and a moving speed) on coordinate axes (an x axis, a y axis, and a z axis) of a center point (or a center point of gravity) of the target object. That is, it is possible to accurately guide a trajectory in a case in which the gripping portion approaches the target object.

In the disclosure, the control unit permits selection of the first function in a case in which there is a surface to which the target object is able to be sucked, and permits selection of the second function in a case in which priority is given to a gripping force of the target object.

It is possible to grip the target object with an appropriate function (the first function and/or the second function).

In the disclosure, an execution unit that determines presence or absence of a coincidence point in movement paths of a plurality of the robots in a case in which there are the plurality of robots within a predetermined range, selects a robot as a contact avoidance target from the plurality of robots in a case in which it is determined that there is the coincidence point of the movement paths, and causes the selected robot as the contact avoidance target to execute contact avoidance is further provided.

In a case in which a plurality of robots are traveling in the respective traveling programs, the robots may come into contact with each other. In the traveling program, contact avoidance may be considered, but a gripping state of the target object by the gripping portion is not considered, and there is a possibility that the target object falls off due to an avoidance behavior.

Therefore, the execution unit determines presence or absence of a coincidence point in movement paths of a plurality of the robots in a case in which there are the plurality of robots within a predetermined range, and selects a robot as a contact avoidance target from the plurality of robots in a case in which it is determined that there is the coincidence point of the movement paths, and causes the selected robot as the contact avoidance target to execute contact avoidance.

As a result, it is possible to avoid contact between the robots.

In the disclosure, the execution unit selects a robot having a light load for gripping the target object based on information transmitted and received between the plurality of robots, and selects the robot in accordance with a predetermined priority order of identification information in a case in which there is no difference in a gripping state of the target object.

It is possible to appropriately select the robot as a contact avoidance target.

In the disclosure, the execution unit selects and executes, as a contact avoidance behavior of the robot as the contact avoidance target, a detour operation of detouring with deviation from a normal traveling route and a deceleration or temporary stop operation of decelerating or temporarily stopping before contact while maintaining the normal traveling route.

It is possible to select an avoidance operation depending on the situation.

According to the disclosure, a control program for a robot causes a computer to operate as the above control unit.

According to the disclosure, there is provided a control system for a robot capable of disposing, opposite a target object, a gripping portion including a palm portion serving as a base for gripping the target object and a plurality of finger portions radially extending from the palm portion and gripping the target object. The control system includes: a suctioning pad that is provided at the palm portion and the finger portion and suctions the target object; a palm sensor unit that is provided at the palm portion and detects target object information including a shape and a position of the target object; a barycentric position recognition unit that is able to recognize at least a barycentric position of the target object; and a control unit that selects any one of a first function of performing sucking by the suctioning pad, a second function of performing grasping by the palm portion, and a third function of using both the first function and the second function as a function of gripping the target object based on a detection result of the palm sensor unit and a recognition result of the barycentric position recognition unit and controls an operation of gripping the target object.

According to the disclosure, the control unit selects any one of the first function of performing sucking by the suctioning pad, the second function of performing grasping by the palm portion, and the third function of using both the first function and the second function as the function of gripping the target object based on the detection result of the palm sensor and the recognition result of the barycentric position recognition unit, and controls the operation of gripping the target object.

As a result, it is possible to quickly and reliably perform a series of tasks including checking the position of the target object, grasping, and gripping by the gripping portion.

In the disclosure, the barycentric position recognition unit includes a state sensor that is provided side by side with the palm sensor unit and detects at least an internal state of the target object, and an analysis unit that analyzes the barycentric position of the target object from the internal state detected by the state sensor.

In each robot, the barycentric position information can be acquired.

In the disclosure, the barycentric position recognition unit functions as an information acquisition unit that acquires barycentric position information of the target object transmitted from an analysis device that analyzes the barycentric position of the target object in association with an identification code of the target object.

It is possible to collectively manage the barycentric position information of the target object.

According to the disclosure, there is provided a control system for a robot that executes a task of gripping a target object by a gripping portion. The control system includes: an information processing device that is mounted on the robot and controls an operation of the robot; and an information management server that collectively manages information regarding gripping of the target object by a plurality of the robots. The information management server includes an analysis unit that generates cube data from the target object that waits to be gripped by the robot, and a transmission unit that stores the cube data generated by the analysis unit in a database in association with ID information for identifying the target object, and transmits the cube data in response to a request based on the ID information from the information processing device. The information processing device includes a cube data acquisition unit that acquires the cube data from the database based on the ID information acquired from a palm sensor unit with respect to the information management server, and a setting unit that sets a gripping point of the target object from the cube data acquired by the cube data acquisition unit.

According to the disclosure, the information processing device that is mounted on the robot and controls the operation of the robot, and the information management server that collectively manages information regarding gripping of the target object by a plurality of robots cooperate with each other to control the operation (in particular, a gripping operation of the target object) of the robot.

That is, the information management server generates cube data from the target object waiting to be gripped by the robot, stores the generated cube data in a database in association with ID information for identifying the target object, and transmits the cube data in response to a request based on the ID information from the information processing device.

The information processing device receives the ID information and the opposing state information with the target object based on the detection result of the palm sensor unit, and requests the cube data from the information management server based on the ID information, thereby acquiring the cube data from the database, and setting the gripping point of the target object from the acquired cube data.

As a result, it is possible to quickly and reliably perform a series of tasks including checking the position of the target object, grasping, and gripping by the gripping portion.

According to the disclosure, there is provided a control system for a robot that includes a gripping portion that grips a target object, a suctioning pad that is provided at the gripping portion and suctions the target object, and a palm sensor unit that is provided at the gripping portion and detects target object information including a shape and a position of the target object, and executes a task of gripping the target object by the gripping portion. The control system includes: an information processing device that is mounted on the robot and controls an operation of the robot; and an information management server that collectively manages information regarding gripping of the target object by a plurality of the robots. The information management server includes an analysis unit that subdivides the target object waiting to be gripped by the robot into a plurality of blocks having coordinates specifying relative positions of the blocks and generates cube data in which attribute information including internal information of the target object is recorded for each of the plurality of blocks, a storage unit that stores the cube data generated by the analysis unit in a database in association with ID information for identifying the target object, and a transmission unit that searches for the cube data corresponding to a request based on the ID information from the information processing device and transmits the cube data. The information processing device includes a palm sensor information reception unit that receives the ID information and opposing state information with the target object based on a detection result of the palm sensor unit, a cube data acquisition unit that acquires the cube data from the database by requesting the cube data from the information management server based on the ID information and the opposing state information received by the palm sensor information reception unit, and a setting unit that sets a gripping point of the target object from the cube data acquired by the cube data acquisition unit.

According to the disclosure, the information processing device that is mounted on the robot and controls the operation of the robot, and the information management server that collectively manages information regarding gripping of the target object by a plurality of robots cooperate with each other to control the operation (in particular, a gripping operation of the target object) of the robot.

That is, the information management server subdivides the target object waiting to be gripped by the robot into a plurality of blocks having coordinates specifying the relative positions, generates the cube data in which the attribute information including the internal information of the target object is recorded for each of the plurality of blocks, stores the generated cube data in the database in association with the ID information for identifying the target object, searches for the corresponding cube data in response to the request based on the ID information from the information processing device, and transmits the cube data.

The information processing device receives the ID information and the opposing state information with the target object based on the detection result of the palm sensor unit, and requests the cube data from the information management server based on the ID information and the opposing state information, thereby acquiring the cube data from the database, and setting the gripping point of the target object from the acquired cube data.

As a result, it is possible to quickly and reliably perform a series of tasks including checking the position of the target object, grasping, and gripping by the gripping portion.

In the disclosure, the information processing device further includes an operation control unit that selects any one of a first function of performing sucking by the suctioning pad, a second function of performing grasping by the gripping portion, and a third function of using both the first function and the second function as a function of gripping the target object based on the detection result of the palm sensor unit, and controls an operation of gripping the target object.

The operation control unit selects any one of the first function of performing sucking by the suctioning pad, the second function of performing grasping by the gripping portion, and the third function of using both the first function and the second function as the function of gripping the target object based on the detection result of the palm sensor, and controls the operation of gripping the target object.

As a result, it is possible to quickly and reliably perform a series of tasks including checking the position of the target object, grasping, and gripping by the gripping portion.

According to the disclosure, an information management program causes a computer to operate as each unit of the information management server.

According to the disclosure, an information processing program causes a computer to operate as each unit of the information processing device.

According to the disclosure, a robot hand includes: a gripping portion including a plurality of finger-like structural bodies for grasping and gripping a target object; a suctioning pad that is provided at the gripping portion and opposes and suctions the target object; and a film body that has a thin-film shape, is bridged between the plurality of finger-like structural bodies of the gripping portion, and is formed to be deformable in accordance with an operation of the gripping portion.

According to the disclosure, the film body is bridged between the plurality of finger-like structural bodies of the gripping portion, is formed to be freely deformable in the operation of the gripping portion, and wraps around the target object in conjunction with the gripping operation of the gripping portion.

That is, the film body has a function of assisting prevention of falling or the like of the target object with respect to the gripping of the target object by the gripping portion. Therefore, it is possible to quickly and reliably perform a series of tasks including checking the position of a load, grasping, and gripping by the gripping portion.

According to the disclosure, there is provided a control system for a robot capable of opposing and gripping a target object. The control system includes: a gripping portion including a plurality of finger-like structural bodies for grasping and gripping the target object; a film body that has a thin-film shape, is provided at the gripping portion, is bridged between the plurality of finger-like structural bodies of the gripping portion, and is formed to be deformable in accordance with an operation of the gripping portion; a palm sensor unit that is provided at the gripping portion and detects target object information including a shape and a position of the target object; and a control unit that controls an operation of gripping the target object based on a detection result of the palm sensor unit.

According to the disclosure, the robot includes the gripping portion, the suctioning pad, the film body, and the palm sensor unit, and the control unit controls the operation of gripping the target object based on the detection result of the palm sensor unit.

Here, the target object is wrapped around in conjunction with the gripping operation of the control unit.

As a result, it is possible to quickly and reliably perform a series of tasks including checking the position of a load, grasping, and gripping by the gripping portion.

The above summary of the disclosure does not enumerate all the necessary features of the disclosure. Further, a subcombination of these feature groups can also be included in the disclosure.

### Advantageous Effects of Invention

As described above, according to the disclosure, it is possible to quickly and reliably perform a series of tasks of checking of a position of a load, grasping, and gripping by the gripping portion.

### BRIEF DESCRIPTION OF DRAWINGS

Fig. 1 is a front view of a humanoid robot according to a first embodiment.
Fig. 2 is a side view of the humanoid robot according to the first embodiment.
Fig. 3A is a front view of a palm side of a gripping portion according to the first embodiment.
Fig. 3B is a perspective view of a suctioning pad attached to the gripping portion.
Fig. 4A is a perspective view of the gripping portion according to the first embodiment.
Fig. 4B is a perspective view of a gripping portion according to a modification example.
Fig. 5 is a diagram schematically illustrating an example of a functional configuration of the humanoid robot.
Fig. 6 is a diagram schematically illustrating an example of a process routine executed by an information processing device.
Fig. 7 is a flowchart illustrating a procedure of gripping control in a case in which an object is gripped by the gripping portion, in conjunction with the overall operation of the humanoid robot in Fig. 1.
Fig. 8 is a diagram schematically illustrating an example of computer hardware that functions as the information processing device.
Fig. 9 is a flowchart illustrating a traveling control routine between humanoid robots according to a second embodiment.
Fig. 10A is a transition diagram illustrating an operation state of a face-to-face contact avoidance program mode in traveling control between the humanoid robots according to the second embodiment.
Fig. 10B is a transition diagram illustrating the operation state of the face-to-face contact avoidance program mode in the traveling control between the humanoid robots according to the second embodiment.
Fig. 10C is a transition diagram illustrating the operation state of the face-to-face contact avoidance program mode in the traveling control between the humanoid robots according to the second embodiment.
Fig. 10D is a transition diagram illustrating the operation state of the face-to-face contact avoidance program mode in the traveling control between the humanoid robots according to the second embodiment.
Fig. 11A is a transition diagram illustrating an operation state of a collision course phenomenon contact avoidance program mode in the traveling control between the humanoid robots according to the second embodiment.
Fig. 11B is a transition diagram illustrating the operation state of the collision course phenomenon contact avoidance program mode in the traveling control between the humanoid robots according to the second embodiment.
Fig. 11C is a transition diagram illustrating the operation state of the collision course phenomenon contact avoidance program mode in the traveling control between the humanoid robots according to the second embodiment.
Fig. 12 is a front view of a palm side of a gripping portion according to a third embodiment.
Fig. 13A is a perspective view of the gripping portion according to the third embodiment.
Fig. 13B is a perspective view of a gripping portion according to a modification example.
Fig. 14 is a comparative diagram illustrating a correspondence relationship between a visible image and a detection image by an X-ray sensor in accordance with a type of a load.
Fig. 15 is a diagram schematically illustrating an example of a functional configuration of a humanoid robot.
Fig. 16 is a flowchart illustrating a procedure of gripping control in a case in which a load is gripped by the gripping portion, in conjunction with the overall operation of the humanoid robot in Fig. 1.
Fig. 17 is a front view of a conveyor device in which an X-ray analyzer that analyzes a barycentric position of a load is installed at a picking site according to a modification example.
Fig. 18A is a schematic configuration diagram illustrating a concept of cube data applied in a fourth embodiment in a visualized manner.
Fig. 18B is a table showing attribute information classified for each of coordinates of each block.
Fig. 19 is a functional block diagram specialized in a load gripping point setting function among processing functions executed by an information processing device having the functional configuration (control system) of a humanoid robot according to the fourth embodiment.
Fig. 20 is a schematic diagram of an analysis device installed in a load collection and distribution site according to the fourth embodiment, and a functional block diagram of an information management server that manages cube data generated based on information received from the analysis device.
Fig. 21 is a flowchart illustrating a procedure of gripping control in a case in which a load is gripped by a gripping portion, in conjunction with the overall operation of the humanoid robot in Fig. 1.
Fig. 22 is a control flowchart illustrating details of a load gripping point setting process subroutine in Step 268 in Fig. 21.
Fig. 23 is a front view of a palm side of a gripping portion according to a fifth embodiment.
Fig. 24A is a perspective view of the gripping portion according to the fifth embodiment.
Fig. 24B is a perspective view of a gripping portion according to a modification example.
Fig. 25 is a perspective view illustrating a state in which a load is gripped by the gripping portion (human shape) according to the fifth embodiment.
Fig. 26A is a front view of a gripping portion having a structure in which a film body according to a modification example can protrude and be retracted.
Fig. 26B is a front view of the gripping portion having the structure in which the film body according to the modification example can protrude and retract.
Fig. 26C is a flowchart illustrating a control routine for the film body protruding and retracting.

### DESCRIPTION OF EMBODIMENTS

Hereinafter, the disclosure will be described through embodiments of the invention, but the following embodiments do not limit the invention according to the claims. In addition, not all combinations of features described in the embodiments are essential to the solution of the invention.

### [First Embodiment]

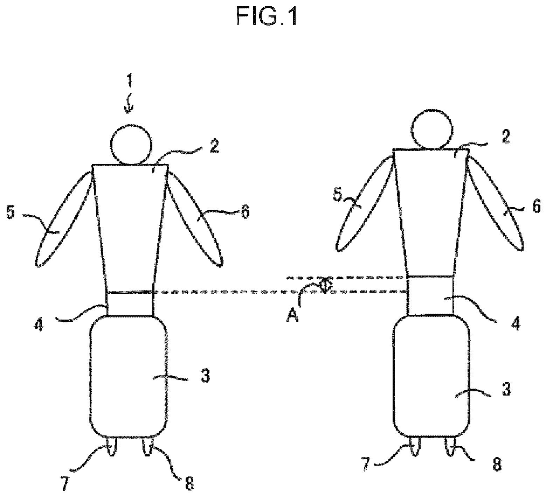

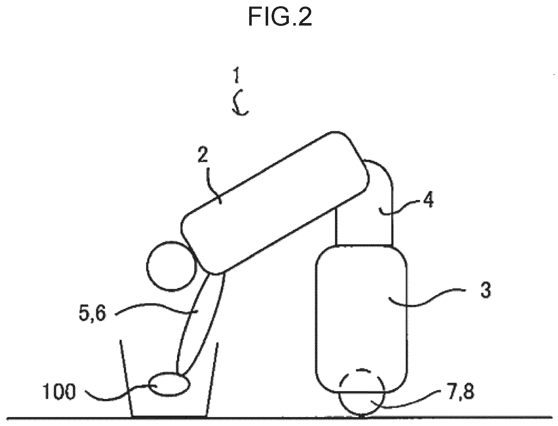

Fig. 1 is a front view of a humanoid robot according to a first embodiment. As illustrated in Fig. 1, a humanoid robot 1 according to the present embodiment includes an upper body 2, a leg portion 3, and a joining portion 4 that rotatably joins the upper body 2 to the leg portion 3. For example, the humanoid robot 1 is disposed in a production line or the like of a factory, and performs a task on an object on a line including a shelf on which an object (load as a picking target or the like) that is a picking target object is displayed, or an object on a floor, or the like. The task includes packing of accommodating a gripped load 100 in a predetermined housing (corrugated cardboard or the like) in addition to picking of gripping a load 100 (see Fig. 2) from the shelf.

The upper body 2 has two arm portions 5 and 6. The arm portions 5 and 6 are rotatably attached to the left and right of the upper body 2. A gripping portion 20 (details will be described later) for gripping an object is attached to the tips of the arm portions 5 and 6. The number of arm portions is not limited to two, and may be one or three or more.

Two wheels 7 and 8 are attached to a lower portion of the leg portion 2, and the leg portion 2 is movable on a floor on which the humanoid robot 1 is disposed.

The joining portion 4 rotatably joins the upper body 2 and the leg portion 3. Therefore, the upper body 2 can be tilted forward and backward with respect to the leg portion 3. Therefore, as illustrated in Fig. 2, the humanoid robot 1 according to the present embodiment can tilt the upper body 2 forward with respect to the leg portion 3 to pick up a load placed on a shelf, a load 100 placed on the floor, and a load 100 dropped on the floor during a task.

The leg portion 2 has a balance function for preventing the humanoid robot 1 from falling in a case in which the upper body 2 tilts forward or backward with respect to the leg portion 3 or the humanoid robot 1 moves.

The joining portion 4 has a function of being able to change a distance between the upper body 2 and the leg portion 3 as illustrated in Fig. 1. Therefore, the position of the upper body 2 in an up-down direction with respect to the leg portion 3 can be adjusted as indicated by an arrow A to match the height of a task stand in the production line.

The driving of the humanoid robot 1 according to the present embodiment is controlled by a control system 10 mounted in the humanoid robot 1.

### (Structure of Gripping Portion 20)

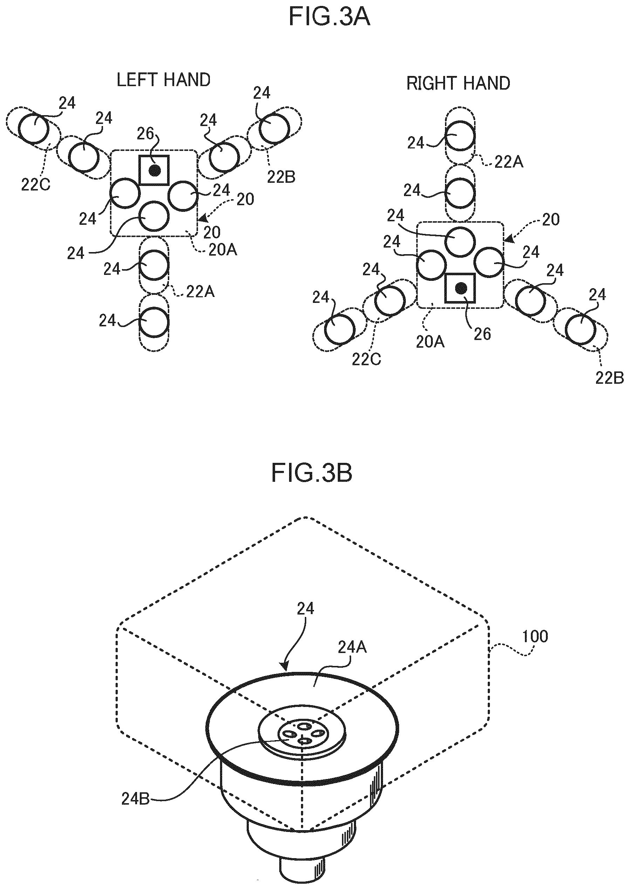

As illustrated in Fig. 3A, the gripping portion 20 attached to the tips of the arm portions 5 and 6 has a hand structure similar to that of a human, and the gripping portion 20 is rotatably attached to the arm portions 5 and 6 (Intelligent Hand System).

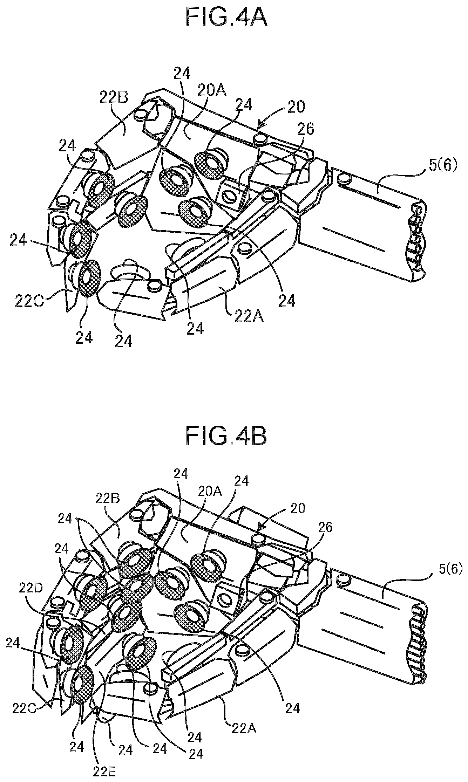

The gripping portion 20 described in the present embodiment includes three finger portions 22A, 22B, and 22C. Each of the finger portions has a plurality of joints. In the present embodiment, the three-finger structure is the same for both the right hand and the left hand as illustrated in Fig. 4A, and may be a five-finger structure as illustrated in Fig. 4B.

A plurality of (three in the present embodiment) suctioning pads 24 are attached to a palm side 20A of the gripping portion 20.

A plurality of (two in the present embodiment) suctioning pads 24 are attached to each of the three finger portions 22A, 22B, and 22C with a joint portion as a boundary.

Furthermore, a palm sensor 26 is attached to the palm side 20A of the gripping portion 20 in the present embodiment. The palm sensor 26 includes a high-resolution camera that identifies the type of the load 100 and a motion processing unit (MoPU) that specifies the position of the load 100.

As illustrated in Fig. 3B, the suctioning pad 24 includes a rubber pad portion 24A that opposes a load 100 in a case in which the load 100 is gripped, and a nipple 24B that forms an air flow path for sucking air in a sealed space formed by close contact between the pad portion 24A and the load 100.

That is, the suctioning pad 24 in the present embodiment has an air suction structure, and has a suction force by sucking air in the sealed space from a hole 24C provided in the nipple 24B to make a vacuum (including substantially vacuum). The suctioning pad 24 is not limited to the air suction structure, and may have a structure in which the volume of the sealed space is simply changed by deformation of the pad portion 24A, and sucking is performed.

### (Details of Palm Sensor 26)

The high-resolution camera constituting the palm sensor 26 in the present embodiment identifies what the captured load 100 is, whether the load 100 is a care product such as a shampoo, a conditioner, a cosmetic product, or a toothpaste, or a food product such as a cup noodle or a confectionery bag, based on captured image information.

In other words, the high-resolution camera has a role of acquiring information for specifying the type (the shape, the size, the hardness, or the like) of the load 100.

The MoPU constituting the palm sensor 26 together with the high-resolution camera in the present embodiment outputs motion information indicating the captured motion (in this case, the motion becomes the relative motion between the arm portions 5 and 6) of the load 100 from an image of an object captured at a frame rate of 1000 frames/second or more, for example, at a frame rate of 1000 frames/second or more. The frame rate may be increased in a case in which the load 100 being moved is detected, and the frame rate may be decreased in a case in which a fixed object (a load 100 that does not move) is detected.

The MoPU outputs, as the motion information, vector information of a motion along a predetermined coordinate axis of a point indicating the existence position of the load 100. That is, the motion information output from the MoPU does not include information necessary for identifying what the captured load 100 is (the care product or food), and includes only information indicating the motion (a moving direction and a moving speed) on coordinate axes (the x axis, the y axis, and the z axis) of the center point (or the center point of gravity) of the load 100.

That is, it is possible to accurately guide the trajectory in a case in which the gripping portion 20 approaches the load 100.

Information output from the palm sensor 26 including the high-resolution camera and the MoPU is supplied to an information processing device 14.

The information processing device 14 can specify the position of the load 100 with high accuracy based on the information from the palm sensor 26 including the high-resolution camera and the MoPU, calculate the degree of spread of the finger portions 22A, 22B, and 22C at the time of gripping, the strength at the time of grasping, the suction force by the suctioning pad 24, and the like, accurately control minute motions of the arm portions 5 and 6 and the gripping portion 20, and handle picking tasks of various loads 100.

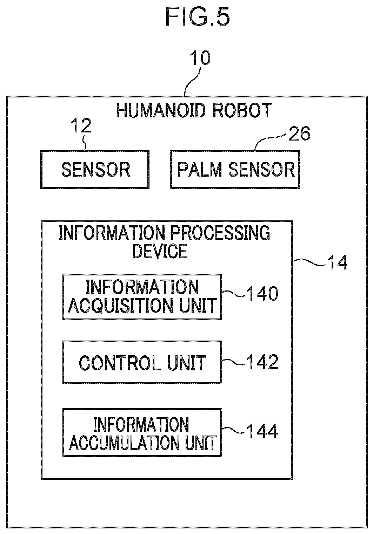

Fig. 5 is a schematic view illustrating an example of a control system for the humanoid robot according to the first embodiment. A control system 10 includes a sensor 12 mounted on the humanoid robot, the palm sensor 26 including the high-resolution camera and the MoPU, and the information processing device 14.

The sensor 12 sequentially acquires information representing at least a distance and an angle between an object around the humanoid robot 1 and the arm portions 5 and 6, the object on which the humanoid robot 1 performs a task. As the sensor 12, a highest-performance camera, a solid-state LiDAR, a multi-color laser coaxial displacement meter, or various other sensor groups can be adopted. Here, examples of the sensor 12 include a vibratory meter, a thermo camera, a hardness meter, a radar, LiDAR, high-pixel/telephoto/ultra-wide angle/360 degrees/high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, or long tail incident AI data.

In addition to the above information, the sensor 12 detects an image, a distance, vibration, heat, odor, a color, sound, ultrasonic waves, ultraviolet rays, infrared rays, or the like. Examples of the information detected by the sensor 12 include the movement of the center of gravity of the humanoid robot 1, detection of the material of the floor on which the humanoid robot 1 is installed, detection of the outside air temperature, detection of the outside air humidity, detection of the vertical and lateral oblique inclination angle of the floor, and detection of the moisture content.

The sensor 12 performs these detections, for example, every nanosecond.

The palm sensor 26 (a high-resolution camera and a MoPU) is a sensor provided in the gripping portions 20 of the arm portions 5 and 6, and has a camera function of capturing an image of the load 100 and a position specifying function of specifying the position of the load 100 separately from the sensor 12.

In a case of using one MoPU, it is possible to acquire vector information of a motion of a point indicating the existence position of the load 100 along each of two coordinate axes (the x axis and the y axis) in a three-dimensional orthogonal coordinate system. Using the principle of a stereo camera, two MoPUs may be used to output vector information of a motion of a point indicating the existence position of the load 100 along each of three coordinate axes (the x axis, the y axis, and the z axis) in the three-dimensional orthogonal coordinate system. The z axis is an axis along a depth method (traveling of a vehicle).

The information processing device 14 includes an information acquisition unit 140, a control unit 142, and an information accumulation unit 144.

The information acquisition unit 140 acquires information of the load 100 detected by the sensor 12 and the palm sensor 26 (a high-resolution camera and a MoPU).

The control unit 142 controls a rotating operation of the joining portion 4, a moving operation in the up-down direction, operations of the arm portions 5 and 6, and the like by using the information acquired by the information acquisition unit 140 from the sensor 12 and artificial intelligence (AI).

The control unit 142 recognizes the type (the shape, the size, the hardness, or the like) and position of the load 100 in detail by using the information acquired by the information acquisition unit 140 from the palm sensor 26 (a high-resolution camera and a MoPU), and performs control such that the palm side 20A opposes the load, and the load is sucked by the suctioning pad 24, and is grasped by the three finger portions 22A, 22B, and 22C in accordance with the outer shape and position (gripping control). The gripping control (only "suction", only "grasping", a combination of "suction" and "grasping", or the like) may be selected by recognizing the type of the object based on the outer shape information.

For example, the control unit 142 executes the following processes as the whole operation.
(1) The joining portion 4 is driven so that the load 100 on the shelf and the floor can be picked up, and the upper body 2 is tilted forward or backward.
(2) The arm portions 5 and 6 and the gripping portion are driven to be able to grip the load 100.
(3) The upper body 2 is driven up and down with respect to the leg portion 3 to match the height of the task stand of the production line.
(4) In order to prevent the humanoid robot 1 from falling, balance is taken.
(5) Driving of wheels 7 and 8 is controlled such that the humanoid robot 1 can push a cart or the like.

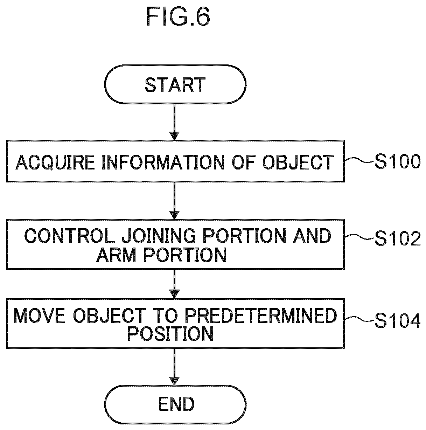

For example, in a case of picking up the load 100 on the floor, the information processing device 14 repeatedly executes the flowchart illustrated in Fig. 6.

In Step S100, the information acquisition unit 140 acquires information of an object detected by the sensor 12.

In Step S102, the control unit 142 picks up the load 100 on the floor by controlling the joining portion 4 and the arm portions 5 and 6 by using the AI and the information of the load 100 acquired in Step S100.

In Step S104, the control unit 142 moves the picked-up load 100 to a predetermined position.

According to the present embodiment, the humanoid robot 1 includes the upper body 2, the leg portion 3, and the joining portion 4 that rotatably joins the upper body 2 and the leg portion 3. The rotation of the joining portion 4 is controlled based on the information acquired by the sensor 12. Therefore, a distance and an angle between the humanoid robot 1 and the load 100 can be determined, so that the operation of picking up the load 100 on the floor can be performed.

Since the joining portion 4 can change the distance between the upper body 2 and the leg portion 3, the position of the upper body 2 in the up-down direction with respect to the leg portion 3 can be adjusted to match the height of the task stand in the production line.

The leg portion 2 has a balance function for preventing the humanoid robot 1 from falling in a case in which the upper body 2 tilts forward or backward with respect to the leg portion 3. Therefore, it is possible to prevent the humanoid robot 1 from falling in a case in which a task of pushing or pulling the load 100 in the production line is performed. Thus, it is possible to prevent a failure of the humanoid robot 1 due to falling, or an injury of a person around the humanoid robot 1.

### (Gripping Control of Load 100)

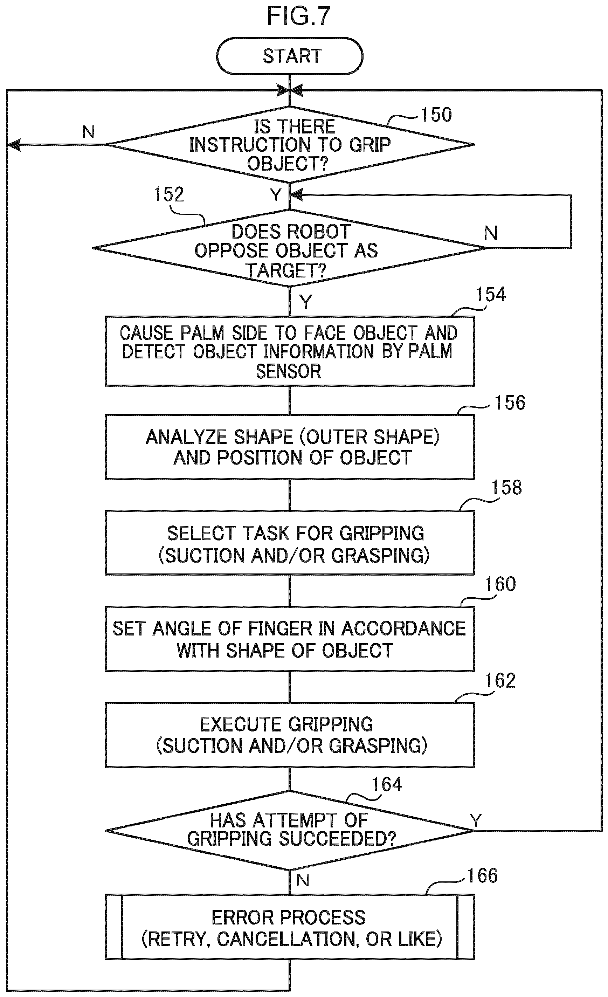

Fig. 7 is a flowchart illustrating a procedure of gripping control in a case in which the load 100 is gripped by the gripping portion 20, in conjunction with the overall operation of the humanoid robot 1 in Fig. 1.

In Step 150, it is determined whether or not an instruction to grip the load 100 is issued. In a case in which the determination is affirmative, the process proceeds to Step 152, the humanoid robot 1 is moved (for example, the arm portions 5 and 6 are operated), the palm side 20A is caused to oppose the load 100 as the target, and the process proceeds to Step 154.

In Step 154, information of the load 100 is detected with causing the palm side 20A to face the load.

In next Step 156, detection information by the palm sensor 26 (a high-resolution camera and a MoPU) is analyzed to recognize the type (the shape, the size, the hardness, or the like) and position of the load 100 in detail, and the process proceeds to Step 158.

In Step 158, a task for gripping the load 100 is selected. For example, selection is performed from only "suction", only "grasping", a combination of "suction" and "grasping", and the like. Then, the process proceeds to Step 160 to set an angle (opening degree) of the finger portions 22A, 22B, and 22C in accordance with the shape of the load 100. Then, the process proceeds to Step 162.

In Step 162, gripping (only "suction", only "grasping", or "suction" and "grasping") of the load 100 is executed.

In next Step 164, it is determined whether or not an attempt to grip the load 100 has succeeded. In a case in which the determination is affirmative, the gripped load 100 is carried to a predetermined place. Then, the process proceeds to Step 150 and the robot waits for an instruction to grip the next load 100.

In addition, in a case in which the determination is negative in Step 164, the process proceeds to Step 166, an error process (for example, retry or cancellation) is executed, and the process returns to Step 150.

As described above, according to the present embodiment, the three finger portions 22A, 22B, and 22C are provided in the gripping portion 20, the plurality of suctioning pads 24 are attached to the palm side 20A and the finger portions 22A, 22B, and 22C of the gripping portion 20, and the suctioning pad 24 suctions the load 100 with the air suction structure, for example, and the finger portions 22A, 22B, and 22C are bent. In this manner, the load 100 can be grasped.

By attaching the palm sensor 26 including the high-resolution camera and the MoPU to the palm side 20A and attaching the gripping portion 20 having the above structure to the arm portions 5 and 6 of the humanoid robot 1, it is possible to reliably pick the object by the suction surface, and even in a case in which the motion of the humanoid robot 1 is early, it is possible to carry the load 100 without dropping from the gripping portion 20.

Since the palm sensor 26 (the high-resolution camera and the MoPU) is mounted on the palm side 20A, it is possible to capture the load 100 with high accuracy, and also handle a task that makes minute motions.

Furthermore, it is possible to grasp a very soft and fragile object by the motions of the finger portions 22A, 22B, and 22C without using the suctioning pad 24, and to prevent the damage and the like of the soft load 100 by adjusting the grasping force.

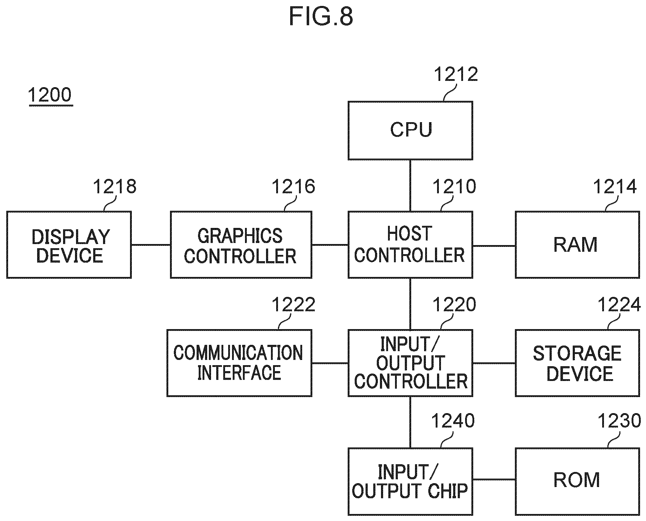

Fig. 8 schematically illustrates an example of a hardware configuration of a computer 1200 that functions as the information processing device 14. A program installed in the computer 1200 can cause the computer 1200 to function as one or more "units" of the device according to the present embodiment, or cause the computer 1200 to execute operations associated with the device according to the present embodiment or one or more "units" of the apparatus, and/or cause the computer 1200 to execute a process according to the present embodiment or a stage of the process. Such a program may be executed by a CPU 1212, thereby causing the computer 1200 to execute a specific operation associated with some or all of the blocks in the flowcharts and block diagrams described herein.

The computer 1200 according to the present embodiment includes the CPU 1212, a RAM 1214, and a graphics controller 1216, which are interconnected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and input/output units such as a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from an IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. Information processing described in these programs is read by the computer 1200 and provides cooperation between the programs and the various types of hardware resources. The apparatus or method may be configured by implementing operations or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on a recording medium.

In addition, the CPU 1212 may cause the RAM 1214 to read all or a necessary part of a file or database stored in an external recording medium such as the storage device 1224, a DVD drive (DVD-ROM), an IC card, or the like, and may execute various types of processing on data on the RAM 1214. Then, the CPU 1212 may write back the processed data to an external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and designated by a command sequence of a program, and writes back the results to the RAM 1214. The CPU 1212 may retrieve information in a file, a database, or the like in the recording medium. For example, in a case in which a plurality of entries each having the attribute value of a first attribute associated with an attribute value of a second attribute are stored in a recording medium, the CPU 1212 may retrieve an entry in which the attribute value of the first attribute coincides with the designated condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. A recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which an operation is performed or "units" of a device that are responsible for performing the operation. Specific stages and "units" may be implemented by dedicated circuits, programmable circuits provided with computer-readable instructions stored on a computer-readable storage medium, and/or a processor provided with computer-readable instructions stored on a computer-readable storage medium. Dedicated circuits may include digital and/or analog hardware circuits, and may include integrated circuits (ICs) and/or discrete circuits. The programmable circuit may include reconfigurable hardware circuits including, for example, logical products, disjunction, exclusive disjunction, NAND, NOR, and other logical operations, flip-flops, registers, and memory elements, such as field programmable gate arrays (FPGA) and programmable logic arrays (PLA).

The computer-readable storage medium may include any tangible device capable of storing instructions for execution by a suitable device, such that a computer-readable storage medium having instructions stored thereon includes an article of manufacture including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of a general purpose computer, special purpose computer, or other programmable data processing apparatus, or programmable circuits, either locally or over a wide area network (WAN), such as a local area network (LAN), the Internet, or the like, to cause the processor or a programmable circuit of the general purpose computer, special purpose computer, or other programmable data processing apparatus to execute the computer-readable instructions to generate means for the processor or programmable circuitry to perform the operations specified in the flowcharts or block diagrams. Examples of the processor include a computer processor, a processing unit, a microprocessor, a digital signal processor, a control section, a microcontrol section, and the like.

### [Second Embodiment]

A second embodiment of the disclosure will be described below.

In the second embodiment, the same components as those in the first embodiment are denoted by the same reference signs, and description thereof will be omitted.

A feature of the second embodiment is that avoidance control in a case in which conveyance paths of a plurality of humanoid robots 1 intersect with each other is applied in addition to gripping control of the load 100 and a conveyance control task by the gripping portion 20 of the humanoid robot 1 in the first embodiment described above. That is, the control unit 142 (see Fig. 5) of the information processing device 14 stores a contact avoidance program, and the contact avoidance program is executed if necessary (for example, in a case in which two or more humanoid robots 1 exist within a predetermined radius that is an example of a predetermined range).

### (Details of Avoidance Control)

In a case in which a plurality of humanoid robots 1 grip a load 100 and convey the load 100 to a predetermined position, or in a case in which the plurality of humanoid robots 1 convey the load 100 and bring the load 100 back to the predetermined position, the traveling paths may intersect with each other.

A conveyance timing of the load 100 is programmed in each humanoid robot 1, and while the surroundings are monitored, the contact prevention measures are taken, but the mutual conveyance timing is not clearly managed.

For example, in a case in which the traveling paths of two humanoid robots 1 are in a straight line in a direction in which the two humanoid robots 1 approach each other, and there is a possibility that the two humanoid robots 1 come into contact with each other in the future, the general-purpose programming does not consider information (presence or absence, the weight, and the like of the load 100) of the load 100 that is being conveyed, and the problem that the load 100 is dropped due to the unnecessary avoidance behavior may occur.

Therefore, in the second embodiment, in a case in which a plurality of humanoid robots 1 (two humanoid robots 1 are exemplified below, but three or more humanoid robots 1 may be provided) exist within the predetermined radius, (1) the information is transmitted and received to and from each other, (2) the contact avoidance target determination (which performs a contact avoidance behavior, or the like) is determined, and (3) the contact avoidance behavior is executed in accordance with a contact pattern.

### (1) Transmission and Reception of Information

Examples of execution information of transmission and reception by the humanoid robot 1 include an identification code (ID) for specifying the humanoid robot 1, whether or not the load 100 is gripped and conveyed, and load information (at least the weight is essential, and information such as a barycentric position, an appearance shape, and a traveling speed may be included).

### (2) Contact Avoidance Target Determination

The contact avoidance target determination is a determination for selecting a side on which a contact avoidance behavior needs to be taken, and the selected humanoid robot 1 acts in accordance with the execution unit (operation program for contact avoidance) which is one of functions of the control unit 142 of the information processing device 14. In other words, the humanoid robot 1 that is not selected continues traveling based on the normal traveling program. The contact avoidance target determination is based on the premise that a robot having a light load for gripping a target object is selected based on information transmitted and received between a plurality of humanoid robots 1, and in a case in which there is no difference in the gripping state of the target object, the robot is selected in accordance with a predetermined priority order of identification information. A specific case of contact avoidance behavior selection will be described below.

(Case 1) A robot that does not grip a load 100 is set as the contact avoidance target.

(Case 2) In a case in which the load 100 is gripped by robots each other, the robot with the load having a lighter weight is set as the contact avoidance target.

(Case 3) In a situation where determination cannot be made in Case 1 and Case 2 described above (condition is the same), a robot having a smaller ID is set as the contact avoidance target.

In addition, in a case in which there is barycentric information of the load 100, a robot in which even though the weight of the load 100 is heavy, the center of gravity is stable (the barycentric position is close to the center portion of the load 100) may be set as the contact avoidance target (the robot having the stable center of gravity has a lower falling risk).

In a case in which there is appearance information of the load 100, a robot that grips a load having small appearance even though the weight of the load 100 is heavy and/or the center of gravity is not stable may be set as the contact avoidance target (the robot with the small load 100 has a lower falling risk).

In a case in which there is conveyance speed information, a robot with the lower conveyance speed may be set as the contact avoidance target.

In a case in which load information is considered in a complex manner, a predetermined calculation expression using the weight information, the barycentric information, the appearance information, the speed information, and the like as parameters may be calculated and quantified, and the contact avoidance target is determined.

### (3) Contact Avoidance Behavior in accordance with Contact Pattern

Contact patterns of two humanoid robots 1 may include a case in which traveling paths of the humanoid robots 1 are on a straight line. In this case, two humanoid robots 1 facing each other gradually approach each other and come into face-to-face contact with each other.

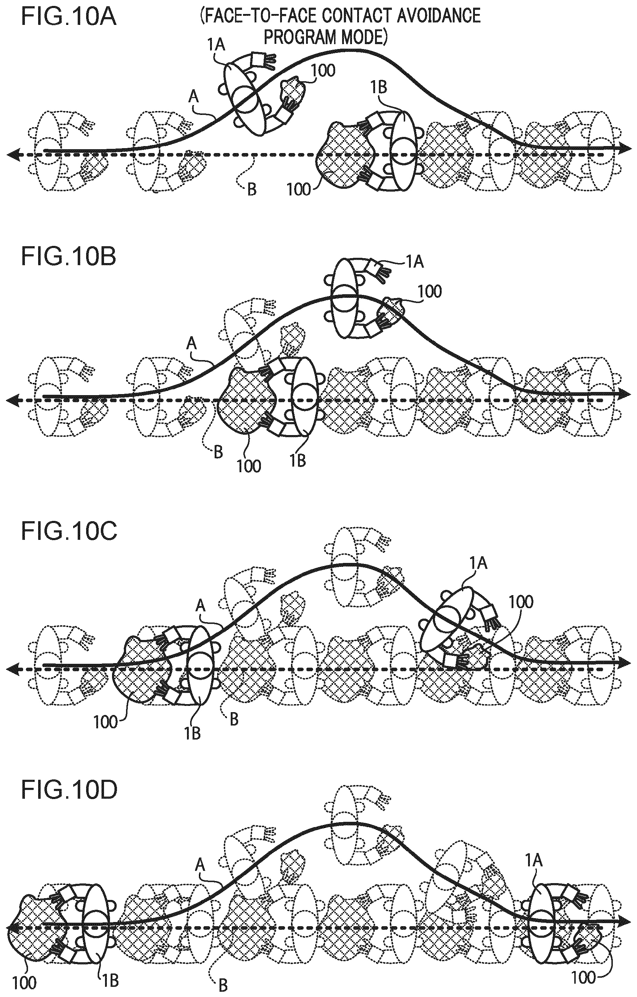

Therefore, by causing the humanoid robot 1 as the contact avoidance target to execute a detour operation program (see Figs. 10A to 10D, details will be described later), the face-to-face contact is prevented.

In the future in a traveling direction, in a case in which the robots travels in a state in which there is a point where the traveling paths intersect with each other and the angle between the existence positions is maintained constant, the robots come into contact with each other at the intersecting point (collision course phenomenon).

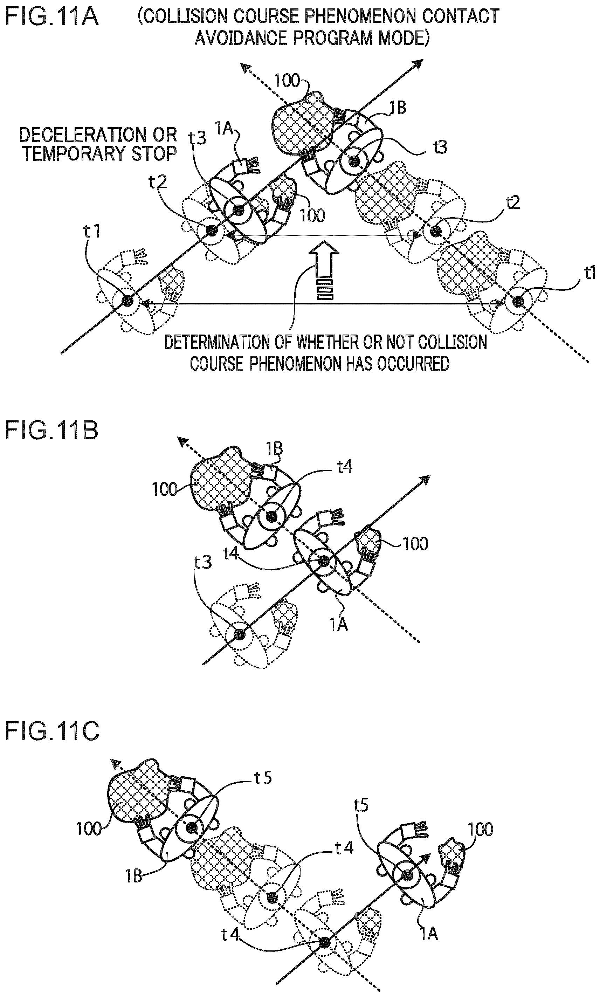

Thus, the humanoid robot 1 that is the contact avoidance target is caused to execute a deceleration (temporary stop) operation program (see Figs. 11A to 11C, details will be described later), whereby the collision course phenomenon contact is prevented.

In addition, except for the face-to-face contact and the collision course phenomenon contact, the two humanoid robots 1 are caused to execute the contact avoidance by the free traveling, as an emergency avoidance process incorporated in the normal traveling program, for example.

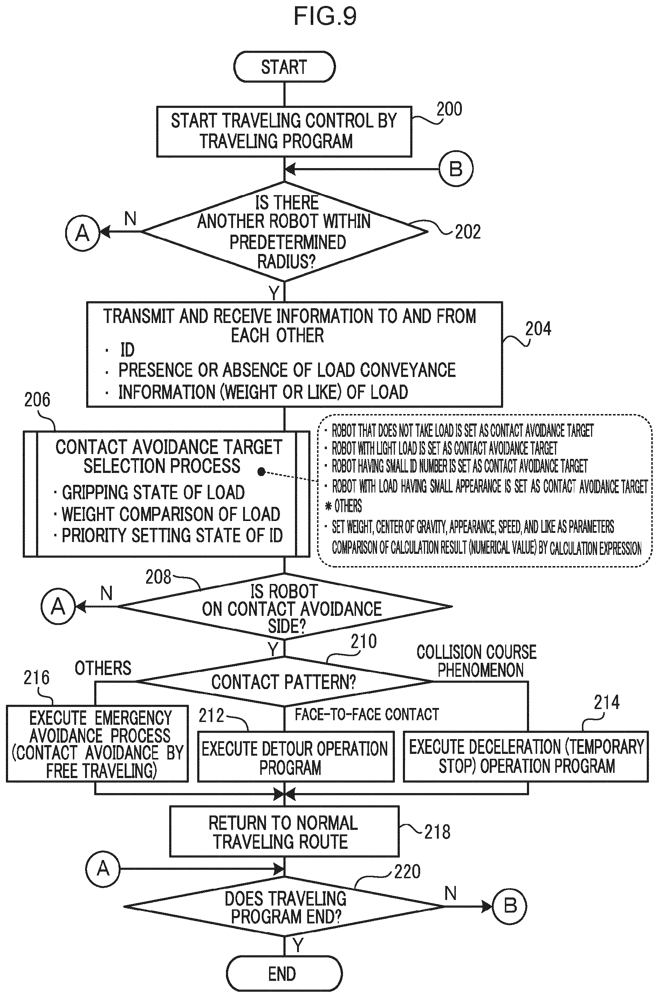

The operation of the second embodiment will be described below with reference to the flowcharts of Fig. 9.

Fig. 9 is a control flowchart illustrating a contact avoidance process routine in traveling control of each humanoid robot 1, which is executed by the control unit 142 (see Fig. 5) of the information processing device 14.

In Step 200, the traveling control by the traveling program is started, and then the process proceeds to Step 202 to determine whether or not another humanoid robot 1 exists within a predetermined radius.

In a case in which the determination is negative in Step 202, it is determined that there is no possibility (less than the predetermined probability) that the humanoid robots 1 come into contact with each other, and the process proceeds to Step 220. In a case in which the determination is affirmative in Step 202, it is determined that there is a possibility (predetermined probability or greater) that the humanoid robots 1 come into contact with each other, and the process proceeds to Step 204.

In Step 204, the humanoid robots 1 within the predetermined radius transmit and receive the information to and from each other.

That is, as described above in "(1) Transmission and Reception of Information", the ID, the presence or absence of the load conveyance, and the information of the load are transmitted and received to and from each other.

In next Step 206, a determination process of a contact avoidance target is executed based on the received information.

That is, as described above in "(2) Contact Avoidance Target Determination", the humanoid robot 1 as the contact avoidance target is determined based on the gripping state of the load 100, the weight comparison of the load 100, and the priority setting state associated with the ID.

In next Step 208, it is determined whether or not the own humanoid robot 1 is the contact avoidance target as a result of a contact avoidance target determination process in Step 206. In a case in which the determination is negative in Step 208, the own humanoid robot 1 continues traveling based on the normal traveling program without avoiding another humanoid robot 1, and the process proceeds to Step 220.

In a case in which the determination is affirmative in Step 208, the own humanoid robot 1 determines that it is necessary to avoid the contact, and the process proceeds to Step 210.

In Step 210, a contact pattern is determined. In the second embodiment, the contact pattern is classified into the face-to-face contact, the collision course phenomenon, and others.

In a case in which the contact pattern is determined to be the face-to-face contact in Step 210, the process proceeds from Step 210 to Step 212 to execute the detour operation program in order to execute a face-to-face contact avoidance process (details will be described later).

In a case in which the contact pattern is determined to be the collision course phenomenon in Step 210, the process proceeds from Step 210 to Step 214 to execute the deceleration (temporary stop) operation program in order to execute a collision course phenomenon avoidance process (details will be described later).

In a case in which it is determined in Step 210 that the contact pattern is neither the face-to-face contact nor the collision course phenomenon, the process proceeds from Step 210 to Step 216 in order to execute the emergency avoidance process.

That is, except for the face-to-face contact and the collision course phenomenon contact, in the second embodiment, the two humanoid robots 1 are caused to execute the contact avoidance by the free traveling, as the emergency avoidance process incorporated in the normal traveling program, for example. In this case, since the avoidance behavior is taken without depending on the contact avoidance target determined in Step 206, the contact is avoided, but a temporal loss (including stopping of traveling or the like) may occur.

Therefore, in the second embodiment, it is possible to perform the quick and reliable avoidance process by selecting the humanoid robot 1 as the contact avoidance target and recognizing the contact pattern.

In a case in which the process of Step 212, Step 214, or Step 216 ends, the process proceeds to Step 218 to instruct return to the normal traveling route, and then proceeds to Step 220 to determine whether or not the traveling program ends.

In a case in which the determination is negative in Step 220, the process returns to Step 202, and the above process is repeated. In a case in which the determination is affirmative in Step 220, the routine ends.

### (Operation Example of Step 212)

Figs. 10A to 10D are execution examples of the detour operation program in Step 212.

As illustrated in Fig. 10A, two humanoid robots 1 move along the same straight line to approach each other (see the humanoid robot 1 indicated by the dotted line in Fig. 10A).

In a case in which the humanoid robot 1A that moves from the left to the right in Fig. 10A is the contact avoidance target and reaches a predetermined distance, the humanoid robot 1 changes the direction to the left side in the traveling direction, and deviates from the normal traveling route (see the solid line in Fig. 10A).

Thereafter, as illustrated in Fig. 10B, the humanoid robot 1B that is not the contact avoidance target traveling on the normal route is linearly moved as indicated by the dotted line arrow in Fig. 10B, but the humanoid robot 1A that is the contact avoidance target detours the normal route as indicated by the solid line arrow in Fig. 10B, so that the mutual contact is avoided.

As illustrated in Fig. 10C, the humanoid robot 1A that has avoided the mutual contact changes the direction to the right side in the traveling direction to return to the normal route, and returns to the normal traveling route (see Fig. 10D).

### (Operation Example of Step 214)

Figs. 11A to 11C are execution examples of the deceleration (temporary stop) operation program in Step 214.

As illustrated in Fig. 11A, two humanoid robots 1 move along different straight traveling line (see the solid line arrows and the dotted line arrows in Fig. 11A), and the two traveling line will intersect with each other in the future.

The humanoid robot 1A that moves along the solid arrow in Fig. 11A is the contact avoidance target, and moves at substantially the same speed as the humanoid robot 1B that is not the contact avoidance target at time t1 and time t2. At time t3, the humanoid robot 1A decelerates or temporarily stops.

The humanoid robot 1B reaches an intersection point between the two traveling lines at time t3. Because the humanoid robot 1A is decelerated or temporarily stopped, the contact at the intersection point is avoided.

Thereafter, as illustrated in Figs. 11B and 11C, at time t4, the humanoid robot 1A reaches the intersection point of the traveling line, but the humanoid robot 1B has already passed the intersection point. Therefore, at time t5, the humanoid robot 1A and the humanoid robot 1B continue traveling along the normal traveling routes.

As described above, according to the avoidance control in the second embodiment, it is possible to more firmly exhibit the object and effect of the disclosure that each humanoid robot 1 that grips and conveys the load 100 quickly and reliably performs a series of tasks of checking the position of the load, grasping, and gripping by the gripping portion. In particular, it is possible to reliably prevent the gripped load 100 from falling off or the like during conveyance.

In the second embodiment, the region where two humanoid robots 1 can pass by each other is assumed. However, in a case in which there is no space where two humanoid robots 1 pass by each other, for example, the humanoid robots 1 may pass by each other in a lateral direction, or one humanoid robot 1 may move back to a space where two humanoid robots 1 can pass by each other.

This avoidance behavior can be easily executed in a case in which the avoidance behavior is programmed in advance, as a response pattern of the emergency avoidance process in Step 216 of Fig. 9.

### [Third Embodiment]

A third embodiment of the disclosure will be described below.

In the third embodiment, the same components as those in the first embodiment are denoted by the same reference signs, and description thereof will be omitted.

### (Structure of Gripping Portion 20)

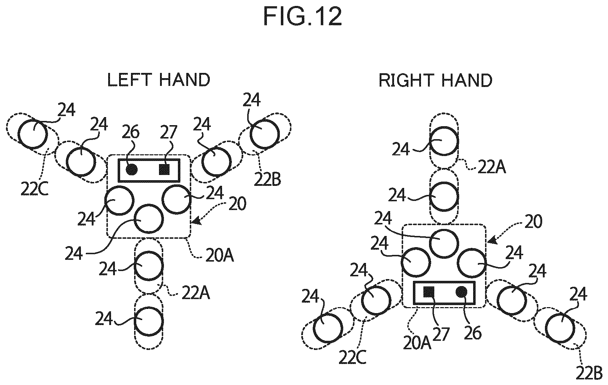

As illustrated in Fig. 12, the gripping portion 20 attached to the tips of the arm portions 5 and 6 has a hand structure similar to that of a human, and the gripping portion 20 is rotatably attached to the arm portions 5 and 6 (Intelligent Hand System).

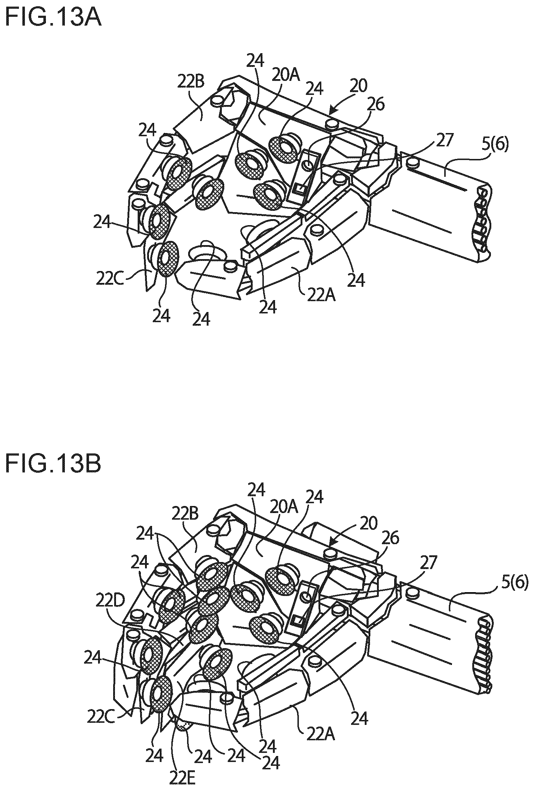

The gripping portion 20 described in the present embodiment includes three finger portions 22A, 22B, and 22C. Each of the finger portions has a plurality of joints. In the present embodiment, the three-finger structure is the same for both the right hand and the left hand as illustrated in Fig. 13A, and may be a five-finger structure as illustrated in Fig. 13B.

An X-ray sensor 27 as a state sensor that is a part of the function of the barycentric position recognition unit is attached to the palm side 20A of the gripping portion 20 to be adjacent to the palm sensor 26 (details will be described later).

Since details of the palm sensor 26 are as described above, the repetitive description thereof will be omitted.

### (Details of X-ray Sensor 27)

The X-ray sensor 27 detects the state of the inside of the package of the load 100 in synchronization (substantially simultaneously) with a case in which the palm sensor 26 specifies the type (the shape, the size, the hardness, and the like) of the load 100.

The X-ray sensor 27 can check and evaluate the state of an invisible inside (the inside of the package) by a transmission image obtained by irradiating an inspection object (load 100) with X-rays.

For example, in a case in which the material accommodated in the package is a fluid, by detecting the filling amount and the position thereof (filling inspection), the barycentric position of the load 100 can be determined, and the gripping point by the gripping portion 20 can be appropriately adjusted.

In addition, it is possible to identify the material, and in the case of metal or non-metal, it is possible to classify plastic, glass, rubber, stone, bone, seashell, and the like. With this classification, it is possible to adjust the gripping point of the gripping portion 20.

In general, the X-ray sensor 27 has a disadvantage that one having a small specific gravity or one being small and light (for example, vinyl, paper, feather, or hair) is not suitable for identification while the X-ray sensor 27 has an advantage that one having a large specific gravity is easily identified. However, the disadvantage can be ignored in the function (adjustment of the gripping point) in the present embodiment because it is not necessary to determine the gripping point of the gripping portion 20 for the lightweight object.

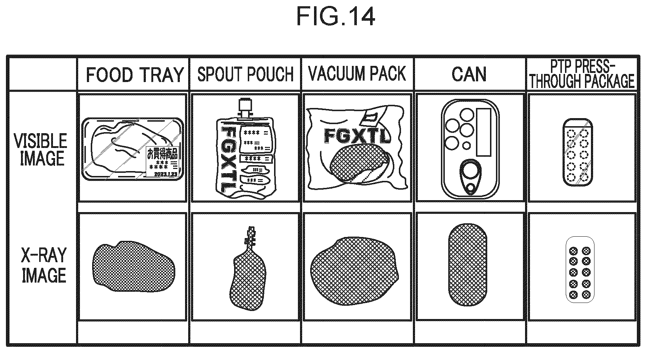

Fig. 14 is a comparative diagram illustrating a correspondence relationship between a visible image and a detection image by the X-ray sensor 27 in accordance with the type of the load 100.

In Fig. 14, a food tray, a spout pouch, a vacuum pack, a can, and a PTP (press-through package) are exemplified. In any case, a portion having a large mass (a large specific gravity) is displayed as an X-ray image, and thus, it is easy to, for example, analyze the barycentric position as compared with a visible image. The image by the X-ray sensor 27 is effective in the analysis of the barycentric position even for a load other than the load 100 illustrated in Fig. 14 (for example, the load 100 is packed in a cardboard, the position of an article inside the cardboard, and the like).

Information output from the X-ray sensor 27 is supplied to the information processing device 14 constituting a part of the barycentric position recognition unit together with the X-ray sensor 27, and the barycentric position is recognized in the information processing device 14.

The barycentric position recognition unit in the present embodiment has a function as an analysis unit that analyzes the barycentric position of the target object from a weight distribution of a portion invisible from the appearance of the target object detected by the X-ray sensor.

Here, in the gripping control of the load 100 by using the palm sensor 26 and the X-ray sensor 27 described above in combination, first, the palm sensor 26 analyzes the shape (outer shape) and the position of the load 100, selects suction and/or gripping operation, and sets the angle of the finger of the gripping portion 20 and the like.

At this time, the X-ray sensor 27 calculates the barycentric position based on the mass of an accommodated object in the package, selects the suction and/or grasping operation, and sets the angle and gripping point of the finger.

As a result, it is possible to appropriately execute selection of the suction and/or grasping operation based on the weight and setting of the gripping point in accordance with the weight deviation, which are difficult to perform recognition only by the appearance.

The information processing device 14 can specify the position of the load 100 with high accuracy based on the information from the palm sensor 26 including the high-resolution camera and the MoPU, calculate the degree of spread of the finger portions 22A, 22B, and 22C at the time of gripping, the strength at the time of grasping, the suction force by the suctioning pad 24, and the like, accurately control minute motions of the arm portions 5 and 6 and the gripping portion 20, and handle picking tasks of various loads 100.

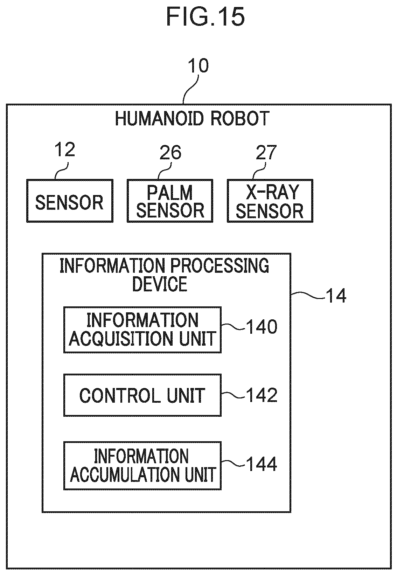

Fig. 15 is a schematic view illustrating an example of a control system for the humanoid robot according to the third embodiment. The control system 10 includes the sensor 12 mounted on the humanoid robot, the palm sensor 26 including the high-resolution camera and the MoPU, the X-ray sensor 27, and the information processing device 14.

The sensor 12 mainly sequentially acquires information representing at least a distance and an angle between a load that is around the humanoid robot 1 and on which the humanoid robot 1 performs a task, and the arm portions 5 and 6. Differing from the palm sensor 26 and the X-ray sensor 27 described above, the sensor 12 acquires information regarding the operation of the humanoid robot 1 itself.

### (Gripping Control of Load 100)

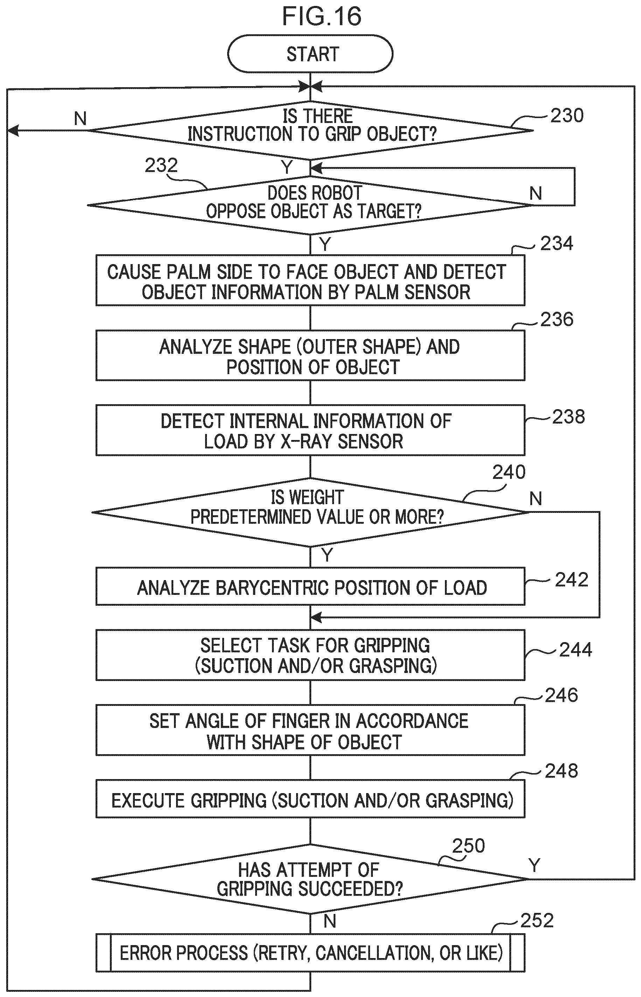

Fig. 16 is a flowchart illustrating a procedure of gripping control in a case in which the load 100 is gripped by the gripping portion 20, in conjunction with the overall operation of the humanoid robot 1 in Fig. 1.

**In** Step 230, it is determined whether or not an instruction to grip the load 100 is issued. **In** a case in which the determination is affirmative, the process proceeds to Step 232, the humanoid robot 1 is moved (for example, the arm portions 5 and 6 are operated), the palm side 20A is caused to oppose the load 100 as the target, and the process proceeds to Step 234.

**In** Step 234, information of the load 100 is detected with causing the palm side 20A to face the load.

**In** next Step 236, detection information by the palm sensor 26 (a high-resolution camera and a MoPU) is analyzed to recognize the type (the shape, the size, the hardness, or the like) and position of the load 100 in detail, and the process proceeds to Step 238.

**In** Step 238, the X-ray sensor 27 detects the information of the inside of the load 100, and then the process proceeds to Step 240 to determine whether or not the weight of the load 100 is equal to or more than a predetermined value by the weight sensor or the like. **In** a case in which the determination is affirmative, the process proceeds to Step 242 to analyze the barycentric position of the load 100 based on the detection information by the X-ray sensor 27, and the process proceeds to Step 244. **In** a case in which the determination is negative in Step 240, the process proceeds to Step 244. The weight determination of the load 100 is not essential, and the barycentric position may be analyzed for all the loads 100.

In Step 244, a task for gripping the load 100 is selected. For example, selection is performed from only "suction", only "grasping", a combination of "suction" and "grasping", and the like. Then, the process proceeds to Step 246 to set an angle (opening degree) of the finger portions 22A, 22B, and 22C in accordance with the shape of the load 100. Then, the process proceeds to Step 248.

That is, it is possible to stably grip the load 100 by adjusting the angles of the finger portions 22A, 22B, and 22C of the gripping portion 20 based on the appearance by the palm sensor 26 and specifying the gripping points of the finger portions 22A, 22B, and 22C based on the barycentric position by the X-ray sensor 27.

The X-ray sensor 27 has a disadvantage that it is not possible to detect a light object. However, as described in Step 240, by taking advantage of the fact that it is determined whether or not the weight of the load 100 is equal to or more than the predetermined value, the X-ray sensor 27 can be used to determine the necessity of the "grasping" operation. In other words, no additional weight sensor is required.

In Step 248, gripping (only "suction", only "grasping", or "suction" and "grasping") of the load 100 is executed.

In next Step 250, it is determined whether or not an attempt to grip the load 100 has succeeded. In a case in which the determination is affirmative, the gripped load 100 is carried to a predetermined place. Then, the process proceeds to Step 230 and the robot waits for an instruction to grip the next load 100.

In addition, in a case in which the determination is negative in Step 250, the process proceeds to Step 252, an error process (for example, retry or cancellation) is executed, and the process returns to Step 230.

As described above, according to the present embodiment, the three finger portions 22A, 22B, and 22C are provided in the gripping portion 20, the plurality of suctioning pads 24 are attached to the palm side 20A and the finger portions 22A, 22B, and 22C of the gripping portion 20, and the suctioning pad 24 suctions the load 100 with the air suction structure, for example, and the finger portions 22A, 22B, and 22C are bent. In this manner, the load 100 can be grasped.

By attaching the palm sensor 26 including the high-resolution camera and the MoPU to the palm side 20A and attaching the gripping portion 20 having the above structure to the arm portions 5 and 6 of the humanoid robot 1, it is possible to reliably pick the object by the suction surface, and even in a case in which the motion of the humanoid robot 1 is early, it is possible to carry the load 100 without dropping from the gripping portion 20.

Since the palm sensor 26 (the high-resolution camera and the MoPU) is mounted on the palm side 20A, it is possible to capture the load 100 with high accuracy, and also handle a task that makes minute motions.

Furthermore, it is possible to grasp a very soft and fragile object by the motions of the finger portions 22A, 22B, and 22C without using the suctioning pad 24, and to prevent the damage and the like of the soft load 100 by adjusting the grasping force.

In the present embodiment, the X-ray sensor 27 and the analysis unit that analyzes the information from the X-ray sensor 27 to analyze the barycentric position of the load 100 are used as the barycentric position recognition unit. An infrared sensor may be applied instead of the X-ray sensor 27. With the infrared sensor, it is possible to recognize a deviation or the like of the interior part by the internal temperature difference, and to specify the barycentric position. In addition, the barycentric position may be recognized by a combination of a plurality of sensors including various sensors exemplified as the sensor 12.

### (Modification Example)

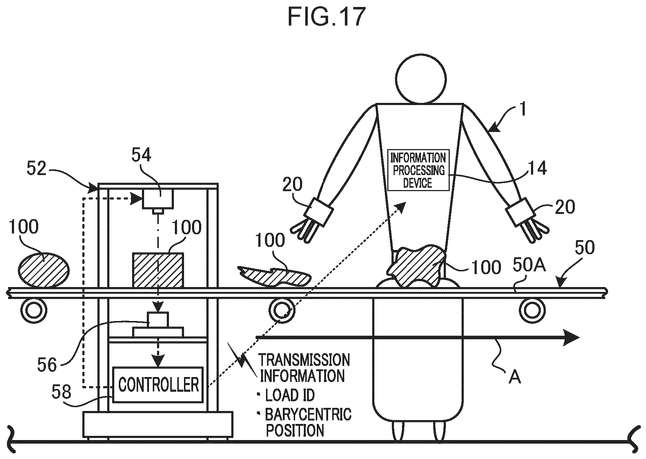

In the present embodiment, the X-ray sensor 27 is attached to the humanoid robot 1, and the barycentric position of a load 100 is analyzed based on the detection information of the X-ray sensor 27 in a case in which each humanoid robot 1 grips the load 100. Alternatively, as illustrated in Fig. 17, an X-ray analyzer 52 common to a plurality of humanoid robots 1 may be provided in a conveyor device 50 at the picking site for a load 100, and information from the X-ray analyzer 52 may be received. In other words, the barycentric position recognition unit of the information processing device 14 functions as an information acquisition unit that acquires information regarding the barycentric position.

That is, as illustrated in Fig. 17, a belt 50A of the conveyor device 50 moves in a direction of the arrow A in Fig. 17 by a driving force (not illustrated), and the load 100 is sequentially conveyed from the left to the right in Fig. 17.

The humanoid robot 1 opposes the belt 50A, stands by until the load 100 to be picked comes to a predetermined position (an opposing position of the humanoid robot 1), and picks the load 100 in a case in which the load 100 reaches the predetermined position.

Here, the X-ray analyzer 52 is installed on the upstream side in a belt conveyance direction with respect to the opposing position of the humanoid robot 1.

In the X-ray analyzer 52, an X-ray generator 54 is disposed in the upper portion of the housing (above the belt 50A), and an X-ray line sensor 56 is disposed in a lower portion of the housing (below the belt 50A).

The X-ray generator 54 and the X-ray line sensor 56 are connected to a controller 58, and the X-ray is emitted from the X-ray generator 54 in accordance with an instruction of the controller 58, and the X-ray passing through the load 100 is detected by the X-ray line sensor 56.

In a case in which the load 100 reaches an inspection position, the controller 58 analyzes the barycentric position of the load 100 based on detection information by the X-ray line sensor 56, and stores the barycentric position in association with an ID (load ID) for identifying the load 100.

The controller 58 has a communication function capable of communicating with the humanoid robot 1, and transmits the stored ID information (load ID) and the stored barycentric position information of the load 100 to the humanoid robot 1 opposing the belt 50A.

In the humanoid robot 1, the information processing device 14 (the barycentric position recognition unit) receives the load ID and the barycentric position information, so that the barycentric position information of the load 100 can be recognized by the collation with the load ID to be gripped.

### [Fourth Embodiment]

A fourth embodiment of the disclosure will be described below.

In the fourth embodiment, the same components as those in the first embodiment are denoted by the same reference signs, and description thereof will be omitted.

### (Gripping Control of Load 100)

Here, in the information processing device 14 according to the present embodiment, in the gripping control of a load 100, the optimum gripping point is set in accordance with the internal situation of the load 100, and for example, falling-off, slipping, rattling during traveling, and the like after gripping are suppressed.

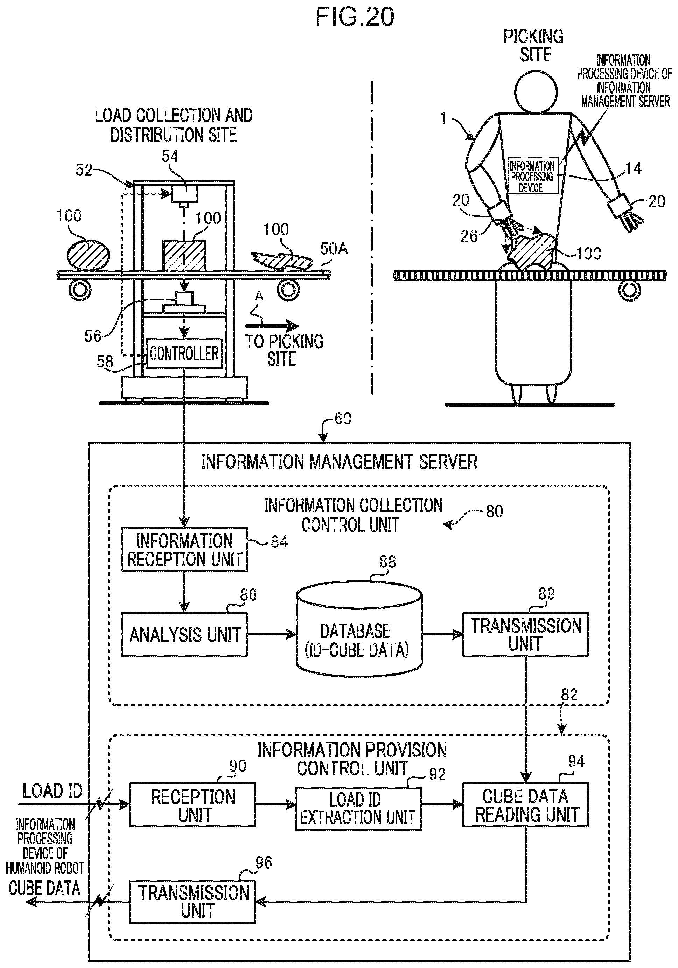

That is, before gripping the load 100, cube data indicating the internal situation of the load 100 is received from an information management server 60 (see Fig. 20, details will be described later) that manages the information regarding the load 100, the internal information of the load 100 is estimated from the cube data, and the gripping point is set.

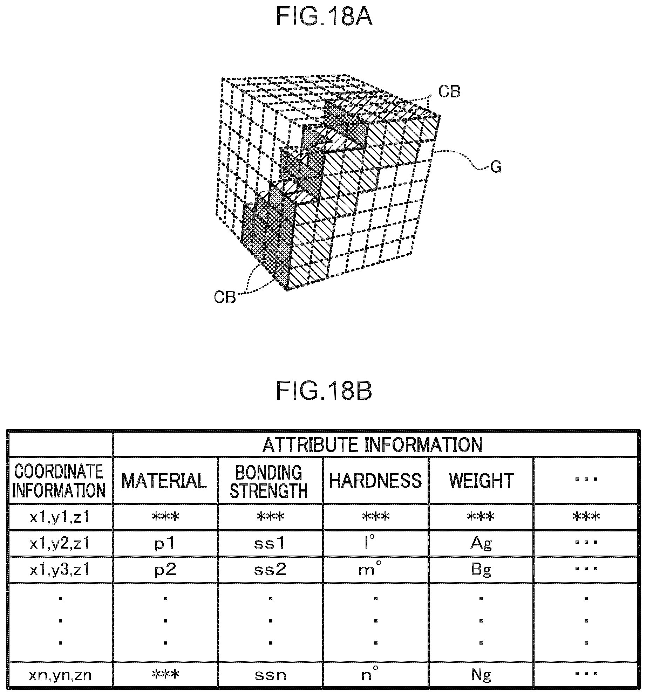

As illustrated in Fig. 18A, the cube data is obtained by configuring the shape of the load 100 as an aggregate with fine blocks (cubes) CB on a three-dimensional grid G (see hatched lines in Fig. 18A). In one aggregate (load 100), coordinates for specifying relative positions are taken, arrangement according to the coordinates is performed, and an assembly having a three-dimensional shape based on the outer shape of the load 100 can be made. In the cube data, not only the outer shape of three-dimensional model data (for example, polygon data) but also various types of attribute information such as the internal structure, the material to be used, the bonding strength, and the weight are recorded by using the coordinates of each block CB as identification information as illustrated in Fig. 18B. Thus, the cube data is information in which the internal state can be recognized, unlike polygon data simply indicating the appearance (contour). The block CB indicates a part of the load 100.

A case in which the gripping point is set based on the cube data of the load 100 will be exemplified below. Any example of the gripping point setting using the cube data may be provided other than the following examples.

(Example 1) An outer shape of the load 100 is accurately ascertained.

For example, although the outer shape of the load 100 can be recognized from the image information by the palm sensor 26 (a high-resolution camera and a MoPU), recognition of the surface of the point to be sucked by the suctioning pad 24 is not possible in some cases. For example, it is preferable that the surface is flat since there are fine unevennesses and the suction force of the suctioning pad 24 decreases. In this case, the material is read from the cube data located at the contour portion of the load 100, and a flat region is searched for as the gripping point.

(Example 2) The center of gravity of the load 100 is accurately ascertained.

In a case in which the load 100 is packaged, the content portion is not necessarily accommodated in the center, and in a case in which the gripping point is set only by the outer shape, a so-called cantilever state is formed, and thus stable gripping is not possible in some cases. Thus, the barycentric position is calculated based on the weight distribution of the entire cube data, and a well-balanced gripping point is set. For example, the gripping point is set such that the barycentric position is on a line linking a plurality of gripping points.

(Example 3) The hardness (in particular, the hardness of the appearance) of the load 100 is accurately ascertained.

In a case in which the load 100 is gripped, gripping by the suctioning pad 24 is effective in a case in which the load is relatively hard and flat, and grasping by the finger portion 22 is effective in a case in which the load is relatively soft and has unevennesses.

In a case in which the packaging material is thin, the gripping force is important regardless of the suction of the suctioning pad 24 or the grasping by the finger portion 22.

Thus, the gripping points are set by a basic procedure based on the cube data, and the gripping points capable of performing gripping with an appropriate gripping force are adjusted (changed) based on the attribute information inside the load 100.

Each block of the cube data including the recorded attribute information may be referred to as a voxel.

The voxel is a three-dimensional pixel value. An object is formed by three-dimensionally arranging voxels that are three-dimensional pixel values to form an image by planarly arranging pixels that are two-dimensional pixel values.

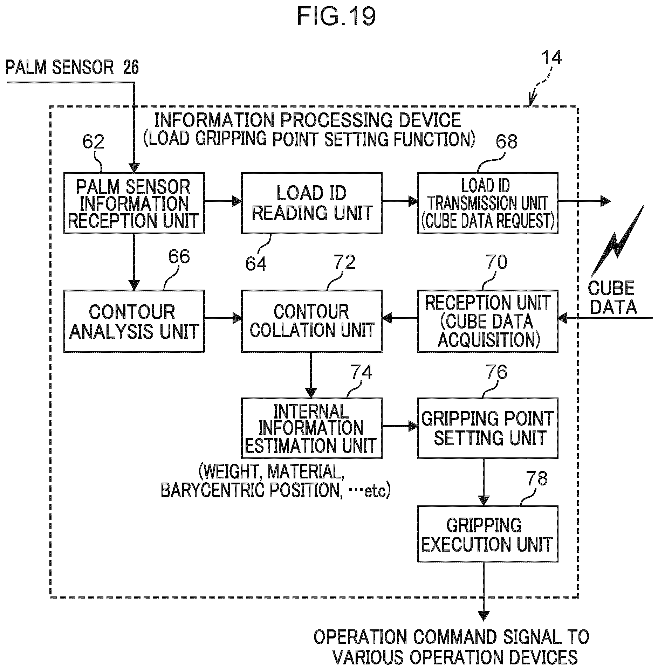

Fig. 19 is a functional block diagram specialized for the load gripping point setting function among the processing functions executed by the information processing device 14.

The information processing device 14 includes a palm sensor information reception unit 62 as the load gripping point setting function.

The palm sensor information reception unit 62 receives external appearance image information of the load 100 intended to be gripped from the palm sensor 26 (see Fig. 20 to be described later), and transmits the external appearance image information to a load ID reading unit 64 and a contour analysis unit 66.

The load ID reading unit 64 reads a load ID, which is ID information for identifying the load 100, from a label or the like stuck to the load 100 from an external appearance image of the load 100. The load ID is associated with information (cube data, transmission source, transmission destination, and the like) regarding the contents of the load, which is stored in advance in the information management server 60 (see Fig. 20 to be described later).

The load ID reading unit 64 is connected to a load ID transmission unit 68 and transmits the read load ID to the load ID transmission unit 68.

The load ID transmission unit 68 transmits the load ID to the information management server 60 (see Fig. 20 to be described later).

A reception unit 70 receives the cube data as a response to the transmission of the load ID by the load ID transmission unit 68, and transmits the cube data to a contour collation unit 72.

That is, the load ID transmission unit 68 and the reception unit 70 function as a cube data acquisition unit for acquiring the cube data based on the load ID.

The contour analysis unit 66 analyzes the contour of the load 100 opposing the humanoid robot 1, based on the appearance image of the load 100 from the palm sensor 26, and transmits the contour to the contour collation unit 72.

The contour collation unit 72 performs collation in which the direction of the appearance of the load 100 is considered as the direction in the opposing state of the humanoid robot 1 and the direction on the data, and transmits the collation result to an internal information estimation unit 74.

The internal information estimation unit 74 estimates the weight, the material, the barycentric position, and the like of the load 100 based on the attribute information of each voxel of the cube data.

The internal information estimation unit 74 is connected to a gripping point setting unit 76 and transmits estimation information such as the weight, the material, and the barycentric position of the load 100 to the gripping point setting unit 76.

The gripping point setting unit 76 sets the gripping point based on the estimation information. For example, it is preferable that the gripping point is as flat and hard as possible, and it is preferable that the gripping point is at a position close to the barycentric position.

The gripping point setting unit 76 is connected to a gripping execution unit 78, and the gripping execution unit 78 grips the load 100 based on the gripping points set by the gripping point setting unit 76.

### (Task Execution Site)

As illustrated in Fig. 20, a task of the load 100 is executed by a load collection and distribution site and a picking site.

The conveyor device 50 is provided in the load collection and distribution site. The belt 50A of the conveyor device 50 moves in the direction of the arrow A in Fig. 20 by a driving force (not illustrated), and the load 100 is sequentially conveyed from the left to the right in Fig. 20, and a collection and distribution task such as accommodating the load 100 in a predetermined shelf is executed.

In the picking site, the humanoid robot 1 picks the load 100 accommodated in a shelf or the like in the load collection and distribution site, and executes a task of conveyance, packing, or the like.

The X-ray analyzer 52 is installed in the conveyor device 50 in the load collection and distribution site.

In the X-ray analyzer 52, an X-ray generator 54 is disposed in the upper portion of the housing (above the belt 50A), and an X-ray line sensor 56 is disposed in a lower portion of the housing (below the belt 50A).

The X-ray generator 54 and the X-ray line sensor 56 are connected to the controller 58, and in a case in which the load 100 reaches the inspection position, the X-ray is emitted from the X-ray generator 54 in accordance with an instruction of the controller 58, and the X-ray passing through the load 100 is detected by the X-ray line sensor 56.

The controller 58 temporarily stores detection information (X-ray image information) by the X-ray line sensor 56 in association with the ID (load ID) for identifying the load 100.

In Fig. 14 described above, a food tray, a spout pouch, a vacuum pack, a can, and a PTP (press-through package) are exemplified, In any case, a portion having a large mass (a large specific gravity) is displayed as an X-ray image, and thus, it is easy to analyze data recorded in each voxel of the cube data, such as the weight, the material, and the barycentric position, as compared with a visible image.

The image by the X-ray sensor 27 is effective in the analysis of the barycentric position even for a load other than the load 100 illustrated in Fig. 14 described above (for example, the load 100 is packed in a cardboard, the position of an article inside the cardboard, and the like). The load 100 includes a cardboard, and there is a case in which an original product is in a part of the inside and the rest is a space. In such a case, the image information by the X-ray sensor can ascertain the position of the product inside.

In the present embodiment, the inside of the load 100 is analyzed by using the X-ray analyzer 52, but another internal inspection device such as an infrared analyzer may be used.

### (Information Management Server 60)

The controller 58 of the X-ray analyzer 52 is connected to the information management server 60, and transmits the load ID and the X-ray image information temporarily stored in the controller 58 to the information management server 60.

The information management server 60 includes an information collection control unit 80 and an information provision control unit 82.

### (Information Collection Control Unit 80)

The information collection control unit 80 includes an information reception unit 84, and receives the load ID and the X-ray image information temporarily stored in the controller 58.

The information reception unit 84 is connected to an analysis unit 86 and transmits the received load ID and X-ray image information to the analysis unit 86.

The analysis unit 86 analyzes the X-ray image information and generates cube data. The generated cube data is stored in a database 88 as cube data associated with the load ID.

The database 88 is connected to a transmission unit 89, and transmits the cube data associated with the load ID based on a request from the information provision control unit 82 which will be described later. It is not essential to provide the database 88 in the information management server 60, and an external storage may be used.

### (Information Provision Control Unit 82)

The information provision control unit 82 includes a reception unit 90 and receives a request signal transmitted from the load ID transmission unit 68 in Fig. 19. The reception unit 90 is connected to a load ID extraction unit 92, extracts the load ID from the transmitted request signal, and transmits the load ID to a cube data reading unit 94.

The cube data reading unit 94 reads the cube data from the database 88 by using the load ID as a search condition via the transmission unit 89 of the information collection control unit 80, and transmits the cube data to a transmission unit 96.

The transmission unit 96 transmits the cube data to the reception unit 70 in Fig. 19.

Upon receiving the cube data, the information processing device 14 of the humanoid robot 1 sets the gripping point of the load 100 by collation with the ID of the load 100 to be gripped.

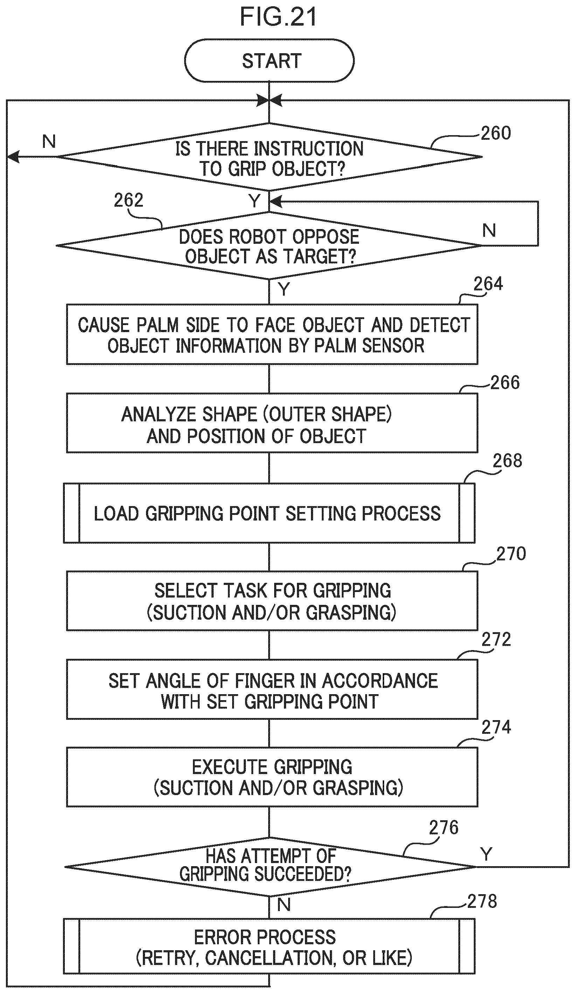

Fig. 21 is a flowchart illustrating a procedure of gripping control in a case in which the load 100 is gripped by the gripping portion 20, which is executed by the information processing device 14 in conjunction with the whole operation of the humanoid robot 1 in Fig. 1.

In Step 260, it is determined whether or not an instruction to grip the load 100 is issued. In a case in which the determination is affirmative, the process proceeds to Step 262, the humanoid robot 1 is moved (for example, the arm portions 5 and 6 are operated), the palm side 20A is caused to oppose the load 100 as the target, and the process proceeds to Step 264.

In Step 264, information of the load 100 is detected with causing the palm side 20A to face the load.

In next Step 266, detection information by the palm sensor 26 (a high-resolution camera and a MoPU) is analyzed to recognize the type (the shape, the size, the hardness, or the like) and position of the load 100 in detail, and the process proceeds to Step 268.

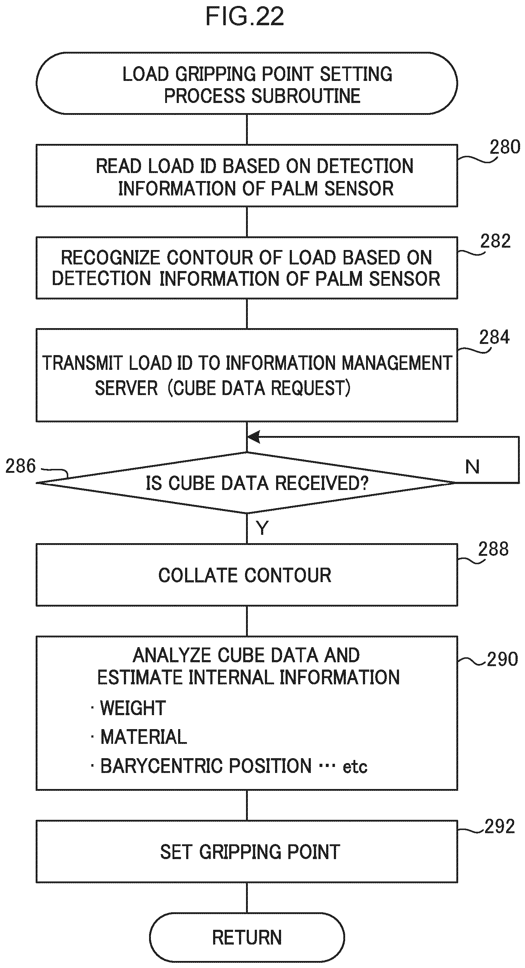

In Step 268, the load gripping point setting process (see Fig. 22, details will be described later) is executed, and the process proceeds to Step 270.

In Step 270, a task for gripping the load 100 is selected. For example, based on the result of the load gripping point setting process in Step 268, selection is performed from only "suction", only "grasping", a combination of "suction" and "grasping", and the like. Then, the process proceeds to Step 272 to set an angle (opening degree) of the finger portions 22A, 22B, and 22C in accordance with the set gripping point. Then, the process proceeds to Step 274.

That is, it is possible to stably grip the load 100 by adjusting the angles of the finger portions 22A, 22B, and 22C of the gripping portion 20 based on the appearance by the palm sensor 26 and specifying the gripping points of the finger portions 22A, 22B, and 22C based on the cube data.

The X-ray sensor 27 has a disadvantage that it is not possible to detect a light object. However, by taking advantage of the fact that it is determined whether or not the weight of the load 100 is equal to or more than a threshold value, the X-ray sensor 27 can be used to determine the necessity of the "grasping" operation.

In Step 274, gripping (only "suction", only "grasping", or "suction" and "grasping") of the load 100 is executed.

In next Step 276, it is determined whether or not an attempt to grip the load 100 has succeeded. In a case in which the determination is affirmative, the gripped load 100 is carried to a predetermined place. Then, the process proceeds to Step 260 and the robot waits for an instruction to grip the next load 100.

In addition, in a case in which the determination is negative in Step 276, the process proceeds to Step 278, an error process (for example, retry or cancellation) is executed, and the process returns to Step 260.

Fig. 22 is a control flowchart illustrating a load gripping point setting process subroutine in Step 268 in Fig. 21.

In Step 280, the load ID is read based on the detection information of the palm sensor 26, and then the process proceeds to Step 282 to recognize the contour of the load 100 based on the detection information of the palm sensor 26.

In next Step 284, the load ID is transmitted to the information management server 60 (cube data request).

In next Step 286, it is determined whether or not the cube data is received. In a case in which the determination is affirmative, the process proceeds to Step 288 to collate the direction of the load 100 opposing the humanoid robot 1 with the direction of an object on the cube data. Then, the process proceeds to Step 290.

In Step 290, the cube data is analyzed (in cooperation with the information recorded in each voxel) to estimate internal information. For example, the weight, the material, the barycentric position, and the like of the load 100 are estimated.

In next Step 292, the gripping points of the load 100 are set. In this setting, for example, a flat place suitable for suction, a hard place having a strong suction force, a position close to the barycentric position, and the like are set, and the process returns to Step 270 in Fig. 21.

As described above, according to the present embodiment, the three finger portions 22A, 22B, and 22C are provided in the gripping portion 20, the plurality of suctioning pads 24 are attached to the palm side 20A and the finger portions 22A, 22B, and 22C of the gripping portion 20, and the suctioning pad 24 suctions the load 100 with the air suction structure, for example, and the finger portions 22A, 22B, and 22C are bent. In this manner, the load 100 can be grasped.

By attaching the palm sensor 26 including the high-resolution camera and the MoPU to the palm side 20A and attaching the gripping portion 20 having the above structure to the arm portions 5 and 6 of the humanoid robot 1, it is possible to reliably pick the object by the suction surface, and even in a case in which the motion of the humanoid robot 1 is early, it is possible to carry the load 100 without dropping from the gripping portion 20.

Since the palm sensor 26 (the high-resolution camera and the MoPU) is mounted on the palm side 20A, it is possible to capture the load 100 with high accuracy, and also handle a task that makes minute motions.

Furthermore, it is possible to grasp a very soft and fragile object by the motions of the finger portions 22A, 22B, and 22C without using the suctioning pad 24, and to prevent the damage and the like of the soft load 100 by adjusting the grasping force.

In the present embodiment, the cube data is generated by the information management server 60 based on the information from the X-ray analyzer 52 of the load collection and distribution site. A database of the load ID-cube data may be stored in advance in the database of the information management server 60.

### [Fifth Embodiment]

A fifth embodiment of the disclosure will be described below.

In the fifth embodiment, the same components as those in the first embodiment are denoted by the same reference signs, and description thereof will be omitted.

### (Structure of Gripping Portion 20)

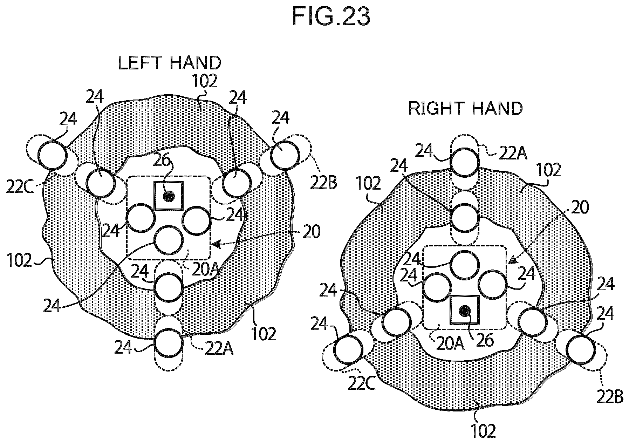

As illustrated in Fig. 23, the gripping portion 20 attached to the tips of the arm portions 5 and 6 has a hand structure similar to that of a human, and the gripping portion 20 is rotatably attached to the arm portions 5 and 6 (see Fig. 1).

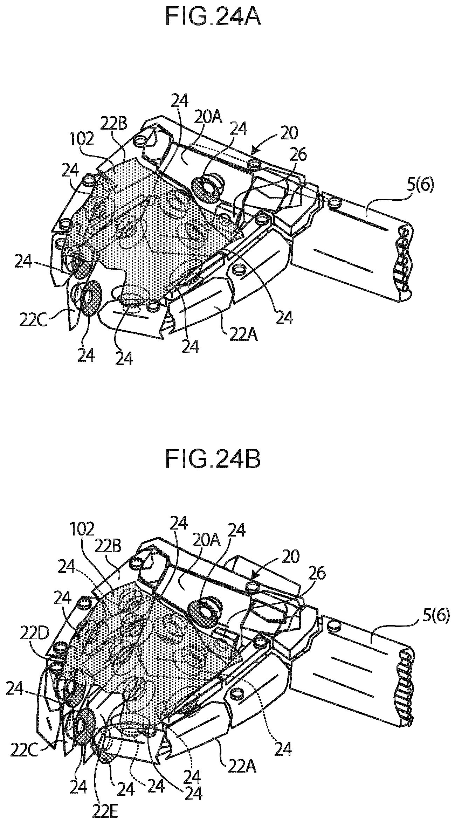

The gripping portion 20 described in the present embodiment includes three finger portions 22A, 22B, and 22C. Each of the finger portions has a plurality of joints. In the present embodiment, the three-finger structure is the same for both the right hand and the left hand as illustrated in Fig. 24A, and may be a five-finger structure (finger portions 22A, 22B, 22C, 22D, and 22E) as illustrated in Fig. 24B.

That is, the gripping portion 20 in the present embodiment has two types of gripping operations, that is, grasping by the finger portions 22A, 22B, and 22C and suction by the suctioning pad 24. Only grasping, only suction, and a combination of grasping and suction are collectively referred to as "gripping" below. In a case of distinguishing each gripping, an annotation (for example, "gripping by grasping", "gripping by suction", and the like) is added each time.

Here, a film body 102 that can be deformed into various shapes is bridged between fingers of the gripping portion 20 (between the finger portion 22A and the finger portion 22B, between the finger portion 22B and the finger portion 22C, and between the finger portion 22C and the finger portion 22A). The film body 102 has a thin film shape (for example, in the form of webbing), and is deformed in accordance with the operation of the gripping portion 20 (finger portions 22A, 22B, and 22C), so that a bag-like space is formed in front of the palm as a whole.

Since the film body 102 is attached to the side surface of each of the finger portions 22A, 22B, and 22C, the pad portion 24A of the suctioning pad 24 has a structure capable of coming into direct contact with the load 100 without interfering with the film body 102 as illustrated in Figs. 24A and 24B.

In terms of physical properties, the film body 102 is typically made of an elastic material (soft material) such as silicon, rubber, and a polyethylene film, but may be a thread material or a string material that can be freely deformed by being incorporated in a net shape.

In the present embodiment, the film body 102 has a function of assisting the gripping force in a case in which the load 100 is gripped, and the gripped load 100 is accommodated in a bag-like space constituted by the film body 102. That is, for example, in a case in which there is a limitation on the gripping force (grasping force, suction force) such as the soft load 100, the load 100 can be stably gripped by being wrapped around by the film body 102.

In addition, by accommodating the load 100 in the bag-like space, the load gripped by the gripping portion 20 is prevented from falling off even in a case in which the gripping force is reduced or the suction force is reduced, and the load also functions as a so-called fail-safe.

Since details of the palm sensor 26 are as described above, the repetitive description thereof will be omitted.

The information processing device 14 (see Fig. 5 described above) on which the humanoid robot 1 is mounted can specify the position of the load 100 with high accuracy based on the information from the palm sensor 26 including the high-resolution camera and the MoPU, calculate the degree of spread of the finger portions 22A, 22B, and 22C at the time of gripping, the strength at the time of grasping, the suction force by the suctioning pad 24, and the like, accurately control minute motions of the arm portions 5 and 6 and the gripping portion 20, and can handle picking tasks of various loads 100.

### (Gripping Control of Load 100)

A procedure of the gripping control in a case of gripping the load 100 according to the fifth embodiment will be described with reference to Fig. 7 described above.

As described above, in Step 150, it is determined whether or not an instruction to grip the load 100 is issued. In a case in which the determination is affirmative, the process proceeds to Step 152, the humanoid robot 1 is moved (for example, the arm portions 5 and 6 are operated), the palm side 20A is caused to oppose the load 100 as the target, and the process proceeds to Step 154.

In Step 154, information of the load 100 is detected with causing the palm side 20A to face the load.

In next Step 156, detection information by the palm sensor 26 (a high-resolution camera and a MoPU) is analyzed to recognize the type (the shape, the size, the hardness, or the like) and position of the load 100 in detail, and the process proceeds to Step 158.

In Step 158, a task for gripping the load 100 is selected. For example, selection is performed from only "suction", only "grasping", a combination of "suction" and "grasping", and the like. Then, the process proceeds to Step 160 to set an angle (opening degree) of the finger portions 22A, 22B, and 22C in accordance with the shape of the load 100. Then, the process proceeds to Step 162.

In Step 162, gripping (only "suction", only "grasping", or "suction" and "grasping") of the load 100 is executed.

Here, in the present embodiment, since the film body 102 is bridged between the finger portions 22A, 22B, and 22C of the gripping portion 20, the load 100 is accommodated in the space in front of the palm, which is formed by the film body 102 and is in close contact to wrap around the load 100 during the grasping operation by the finger portions 22A, 22B, and 22C and/or the suction operation of the suctioning pad 24.

### (Example of Gripping Operation by Gripping portion 20)

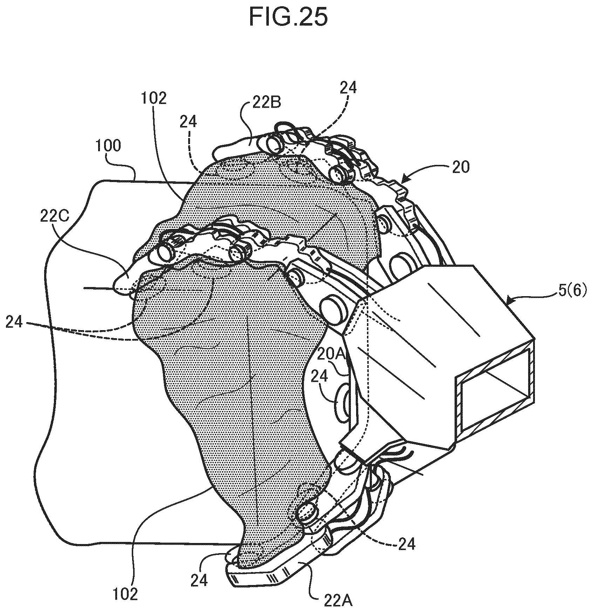

Fig. 25 illustrates an operation example in a case in which the gripping portion 20 according to the fifth embodiment grips the load 100.

The gripping portion 20 has a structure imitating the shape of a human hand, and includes three fingers 22A, 22B, and 22C. Each of the finger portions includes a plurality of joints.

Since the film body 102 is bridged between the finger portions 22A, 22B, and 22C on the gripping portion 20, in a case in which the gripping portion 20 grips the load 100, the gripping portion can be accommodated in the bag-like space constituted by the film body 102 and can be caused to function as an aid for the gripping state of the load 100.

For example, a very soft and fragile object may be grasped by the motions of the finger portions 22A, 22B, and 22C without using the suctioning pad 24, and the wrapping of the film body 102 effectively acts as an aid of the grasping operation. In other words, it is possible to prevent the damage and the like of the soft load 100 by adjusting the grasping force by the amount that is stable by wrapping the film body 102.

In addition, the load 100 gripped by the gripping portion 20 is prevented from falling off even in a case in which the grasping force is reduced or the suction force is reduced (fail-safe function).

In next Step 164, it is determined whether or not an attempt to grip the load 100 has succeeded. In a case in which the determination is affirmative, the gripped load 100 is carried to a predetermined place. Then, the process proceeds to Step 150 and the robot waits for an instruction to grip the next load 100.

In addition, in a case in which the determination is negative in Step 164, the process proceeds to Step 166, an error process (for example, retry or cancellation) is executed, and the process returns to Step 150.

As described above, according to the present embodiment, since the film body 102 is attached to the gripping portion 20, and the film body 102 forms a bag-like space for accommodating the load 100, it can be used as a gripping force to assist the gripping operation by the finger portions 22A, 22B, and 22C and the suction operation by the suctioning pad 24.

Since the gripping state of the load 100 is stabilized, the film body 102 can be prevented from falling off due to vibration during the movement of the humanoid robot 1.

Further, in a case in which adhesive silicone rubber is applied as the material of the film body 102, the film body 102 can adhere and pull out the load 100 even though the load 100 is accommodated in a narrow tote and the suctioning pad 24 cannot be positioned as desired.

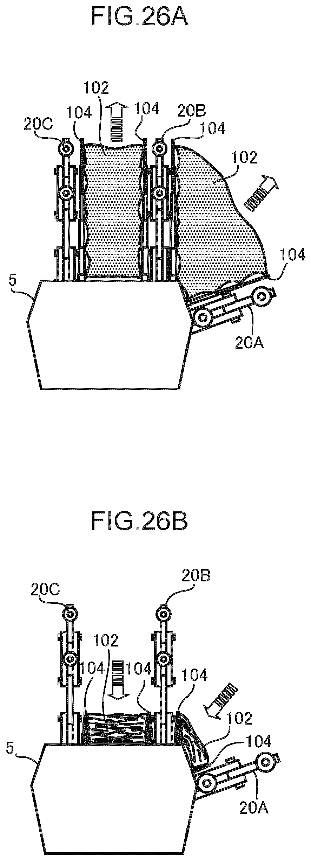

In the present embodiment, the film body 102 has a structure of being normally bridged between the finger portions 22A, 22B, and 22C, and may be appropriately accommodated. For example, as illustrated in Figs. 26A and 26B, a structure in which an extensible rod 104 that performs a joint operation in conjunction with the finger portions 22A, 22B, and 22C is attached to the tip portion of the arm portion 5 (6), and the film body 102 is bridged over the extensible rod 104 is made.

Since the extensible rod 104 includes a plurality of short rods, and the film body 102 is attached to each of the short rods in a spot manner, in a case in which the extensible rod 104 is extended, the film body 102 is bridged between the finger portions 22A, 22B, and 22C (state of Fig. 26A), and in a case in which the extensible rod 104 is contracted, the film body 102 is folded (state of Fig. 26B).

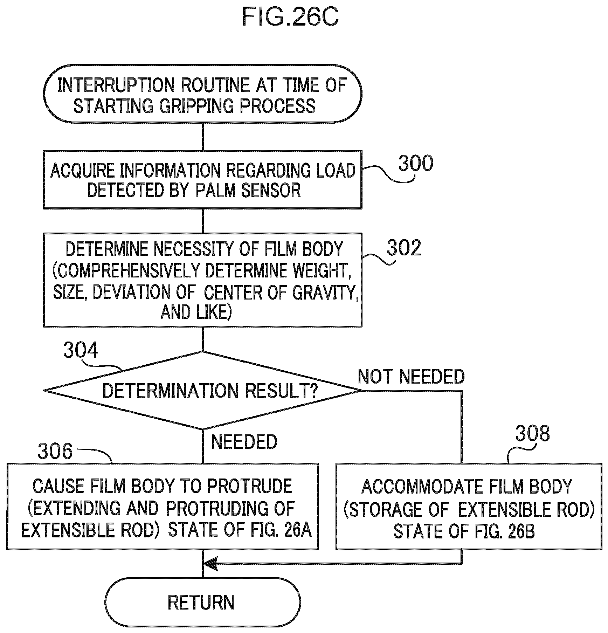

Fig. 26C is a routine of interrupting at time of starting gripping in the above-described gripping control process of Fig. 7 described above. In Step 300, the information of the load 100 detected by the palm sensor 26 is acquired, and then the process proceeds to Step 302 to execute the necessity determination of the film body 102. The necessity of the film body 102 is determined by comprehensively determining the weight, the size, the deviation of the center of gravity, and the like of the load 100.

In next Step 304, the determination result of Step 302 is checked. In a case in which it is determined in Step 304 that the film body 102 is needed, the process proceeds to Step 308, and the extensible rod 104 is extended to take out the film body 102. As a result, the film body 102 is bridged between the finger portions 22A, 22B, and 22C (the state of Fig. 26A).

In a case in which it is determined in Step 304 that the film body 102 is not needed, the process proceeds to Step 308, and the extensible rod 104 is stored to accommodate the film body 102. As a result, the film body 102 is excluded from between the finger portions 22A, 22B, and 22C and stored (the state of Fig. 26B).

The movement between the use state and the storage state of the film body 102 is not limited to the extensible rod, and may be other structures such as a winding type.

In the present embodiment, the humanoid robot 1 is taken as an example, and the description has been given of the general-purpose task in which the humanoid robot 1 moves to a first predetermined position, grips a load 100, and conveys the load 100 to a second predetermined position. However, for example, the gripping portion 20 in the present embodiment can effectively exhibit the effect in Specific Task 1 to Specific Task 4 described below. The gripping portion 20 in the present embodiment is not limited to the following Specific Tasks 1 to 4, and can be applied to all tasks including a step of gripping the load 100.

(Specific Task 1) A task of gripping the load 100 at the first predetermined position, conveying the load 100 to the second predetermined position, and packaging the load 100 in a predetermined accommodation portion (cardboard or the like) at a second predetermined value.

(Specific Task 2) A task of gripping and picking up the load 100 conveyed by a belt conveyor or the like at a fixed position, and packing the load in an accommodation portion (cardboard or the like) in this place.

(Specific Task 3) A task of receiving the load 100 that is gripped and conveyed by another humanoid robot 1 and packing the load in an accommodation portion (cardboard or the like) in this place.

(Specific Task 4) A task of unpacking a delivered accommodation portion (cardboard or the like), taking out the load 100, and conveying and storing the load to a predetermined management shelf (based on an identification code assigned in advance).

As described above, according to the present embodiment, the three finger portions 22A, 22B, and 22C are provided in the gripping portion 20, the plurality of suctioning pads 24 are attached to the palm side 20A and the finger portions 22A, 22B, and 22C of the gripping portion 20, and the suctioning pad 24 suctions the load 100 with the air suction structure, for example, and the finger portions 22A, 22B, and 22C are bent. In this manner, the load 100 can be grasped. The film body 102 assists the gripping, and a stable gripping state can be continued.

In addition, with respect to the gripping operation (grasping operation of finger portions 22A, 22B, and 22C and/or suction operation by the suctioning pad 24), the bag-like space is formed around the palm by the film body 102 so that a part or the whole of the load 100 is ended, and thus, it is possible to assist the gripping state by the gripping operation and to prevent the load 100 from falling off.

Furthermore, since the palm sensor 26 including the high-resolution camera and the MoPU is attached to the palm side 20A, and the gripping portion 20 having the above structure is attached to the arm portions 5 and 6 of the humanoid robot 1, it is possible to reliably pick an object by the suction surface, and it is possible to carry the load 100 without dropping from the gripping portion 20 even though the motion of the humanoid robot 1 is early.

Since the palm sensor 26 (the high-resolution camera and the MoPU) is mounted on the palm side 20A, it is possible to capture the load 100 with high accuracy, and also handle a task that makes minute motions.

Furthermore, it is possible to grasp a very soft and fragile object by the motions of the finger portions 22A, 22B, and 22C without using the suctioning pad 24, and to prevent the damage and the like of the soft load 100 by adjusting the grasping force.

Although the disclosure has been described with reference to the embodiments, the technical scope of the disclosure is not limited to the scope described in the embodiments. It is apparent to those skilled in the art that various changes or improvements can be made to the embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even though the operation flow in the claims, the specification, and the drawings is described using "first", "next", and the like for convenience, it does not mean that it is essential to perform in this order.

The disclosure of Japanese Patent Application No. 2022-195944 filed on December 7, 2022, Japanese Patent Application No. 2023-010484 filed on January 26, 2023, Japanese Patent Application No. 2023-010485 filed on January 26, 2023, Japanese Patent Application No. 2023-014884 filed on February 2, 2023, and Japanese Patent Application No. 2023-015496 filed on February 3, 2023 are incorporated herein by reference in their entirety. All documents, patent applications, and technical standards described in this specification are incorporated herein by reference to the same extent as if each document, patent application, and technical standard were specifically and individually indicated to be incorporated by reference.

## Claims

1. A control system for a robot capable of disposing, opposite a target object, a gripping portion including a palm portion serving as a base for gripping the target object and a plurality of finger portions radially extending from the palm portion and gripping the target object, the control system comprising:
a suctioning pad that is provided at the palm portion and the finger portion, and that suctions the target object;
a palm sensor unit that is provided at the palm portion, and that detects target object information including a shape and a position of the target object; and
a control unit that selects any one of a first function of performing suctioning by the suctioning pad, a second function of performing grasping by the palm portion, and a third function of using both the first function and the second function, as a function of gripping the target object, based on a detection result of the palm sensor unit, and that controls an operation of gripping the target object.

2. The control system for a robot according to claim 1, wherein
the palm sensor unit includes a camera that captures an image of the target object and that identifies a type of the target object, and a motion processing unit that specifies a position of the target object.

3. The control system for a robot according to claim 1, wherein
the control unit permits selection of the first function in a case in which there is a surface to which the target object is able to be suctioned, and permits selection of the second function in a case in which priority is given to a gripping force of the target object.

4. The control system for a robot according to claim 1, further comprising:
an execution unit that determines presence or absence of a coincidence point in movement paths of a plurality of robots in a case in which the plurality of robots are within a predetermined range, that selects a robot as a contact avoidance target from the plurality of robots in a case in which it is determined that there is the coincidence point of the movement paths, and that causes the selected robot serving as the contact avoidance target to execute contact avoidance.

5. The control system for a robot according to claim 4, wherein the execution unit selects a robot having a light load for gripping the target object based on information transmitted and received between the plurality of robots, and selects the robot in accordance with a predetermined priority order of identification information in a case in which there is no difference in a gripping state of the target object.

6. The control system for a robot according to claim 4, wherein
the execution unit selects and executes, as a contact avoidance behavior of the robot serving as the contact avoidance target, a detour operation of detouring with deviation from a normal traveling route and a deceleration or temporary stop operation of decelerating or temporarily stopping before contact while maintaining the normal traveling route.

7. A control system for a robot capable of dispose, opposite a target object, a gripping portion including a palm portion serving as a base for gripping the target object and a plurality of finger portions radially extending from the palm portion and gripping the target object, the control system comprising:
a suctioning pad that is provided at the palm portion and the finger portion, and that suctions the target object;
a palm sensor unit that is provided at the palm portion, and that detects target object information including a shape and a position of the target object;
a barycentric position recognition unit that is able to recognize at least a barycentric position of the target object; and
a control unit that selects any one of a first function of performing suctioning by the suctioning pad, a second function of performing grasping by the palm portion, and a third function of using both the first function and the second function, as a function of gripping the target object, based on a detection result of the palm sensor unit and a recognition result of the barycentric position recognition unit, and that controls an operation of gripping the target object.

8. The control system for a robot according to claim 7, wherein
the barycentric position recognition unit includes a state sensor that is provided side by side with the palm sensor unit and that detects at least an internal state of the target object, and an analysis unit that analyzes the barycentric position of the target object from the internal state detected by the state sensor.

9. The control system for a robot according to claim 7, wherein
the barycentric position recognition unit functions as an information acquisition unit that acquires barycentric position information of the target object transmitted from an analysis device that analyzes the barycentric position of the target object in association with an identification code of the target object.

10. The control system for a robot according to claim 7, wherein
the palm sensor unit includes a camera that captures an image of the target object and that identifies a type of the target object, and a motion processing unit that specifies a position of the target object.

11. The control system for a robot according to claim 7, wherein
the control unit permits selection of the first function in a case in which there is a surface to which the target object is able to be suctioned, and permits selection of the second function in a case in which priority is given to a gripping force of the target object.

12. A control system for a robot that executes a task of gripping a target object by a gripping portion, the control system comprising:
an information processing device that is mounted at the robot, and that controls an operation of the robot; and
an information management server that collectively manages information regarding gripping of the target object by a plurality of robots, wherein:
the information management server includes:
an analysis unit that generates cube data from the target object that waits to be gripped by the robot, and
a transmission unit that stores the cube data generated by the analysis unit in a database in association with ID information for identifying the target object, and that transmits the cube data in response to a request based on the ID information from the information processing device, and
the information processing device includes:
a cube data acquisition unit that acquires the cube data from the database based on the ID information acquired from a palm sensor unit with respect to the information management server, and
a setting unit that sets a gripping point of the target object from the cube data acquired by the cube data acquisition unit.

13. A control system for a robot that includes a gripping portion that grips a target object, a suctioning pad that is provided at the gripping portion and suctions the target object, and a palm sensor unit that is provided at the gripping portion and detects target object information including a shape and a position of the target object, and that executes a task of gripping the target object by the gripping portion, the control system comprising:
an information processing device that is mounted at the robot, and that controls an operation of the robot; and
an information management server that collectively manages information regarding gripping of the target object by a plurality of robots, wherein:
the information management server includes:
an analysis unit that subdivides the target object waiting to be gripped by the robot into a plurality of blocks having coordinates specifying relative positions of the blocks, and that generates cube data in which attribute information including internal information of the target object is recorded for each of the plurality of blocks,
a storage unit that stores the cube data generated by the analysis unit in a database in association with ID information for identifying the target object, and
a transmission unit that searches for the cube data corresponding to a request based on the ID information from the information processing device, and that transmits the cube data, and
the information processing device includes:
a palm sensor information reception unit that receives the ID information and opposing state information with respect to the target object based on a detection result of the palm sensor unit,
a cube data acquisition unit that acquires the cube data from the database by requesting the cube data from the information management server based on the ID information and the opposing state information received by the palm sensor information reception unit, and
a setting unit that sets a gripping point of the target object from the cube data acquired by the cube data acquisition unit.

14. The control system for a robot according to claim 13, wherein
the information processing device further includes an operation control unit that selects any one of a first function of performing suctioning by the suctioning pad, a second function of performing grasping by the gripping portion, and a third function of using both the first function and the second function, as a function of gripping the target object, based on the detection result of the palm sensor unit, and that controls an operation of gripping the target object.

15. The control system for a robot according to claim 13, wherein
the palm sensor unit includes a camera that captures an image of the target object and that identifies a type of the target object, and a motion processing unit that specifies the position of the target object.

16. A robot hand comprising:
a gripping portion including a plurality of finger-like structural bodies for grasping and gripping a target object;
a suctioning pad that is provided at the gripping portion, and that opposes and suctions the target object; and
a film body that has a thin-film shape, that is bridged between the plurality of finger-like structural bodies of the gripping portion, and that is formed to be deformable in accordance with an operation of the gripping portion.

17. The robot hand according to claim 16, wherein the film body is able to take a first state of being bridged between the plurality of finger-like structural bodies and a second state of being excluded from between the plurality of finger-like structural bodies.

18. A control system for a robot capable of opposing and gripping a target object, the control system comprising:
a gripping portion including a plurality of finger-like structural bodies for grasping and gripping the target object;
a suctioning pad that is provided at the gripping portion, and that opposes and suctions the target object;
a film body that has a thin-film shape, that is bridged between the plurality of finger-like structural bodies of the gripping portion, and that is formed to be deformable in accordance with an operation of the gripping portion;
a palm sensor unit that is provided at the gripping portion, and that detects target object information including a shape and a position of the target object; and
a control unit that controls an operation of gripping the target object based on a detection result of the palm sensor unit.

19. The control system for a robot according to claim 18, wherein
the palm sensor unit includes a camera that captures an image of the target object and that identifies a type of the target object, and a motion processing unit that specifies the position of the target object.

20. The control system for a robot according to claim 18, wherein
the control unit selects any one of a first function of performing suctioning by the suctioning pad, a second function of performing grasping by the gripping portion, and a third function of using both the first function and the second function, as a function of gripping the target object, based on the detection result of the palm sensor unit, and controls an operation of gripping the target object.

21. A control program for a robot that causes a computer to operate as the control unit according to any one of claims 1 to 6.

22. A control program for a robot that causes a computer to operate as the control unit according to any one of claims 7 to 11.

23. An information management program that causes a computer to operate as each unit of the information management server according to claim 12 or 13.

24. An information processing program that causes a computer to operate as each unit of the information processing device according to claim 12 or 13.

25. A control program for a robot that causes a computer to operate as the control unit according to any one of claims 18 to 20.
